(19) Europäisches Patentamt
European Patent Office
Office européen des brevets

(11) Numéro de publication : **0 014 652**
**B1**

(12) # FASCICULE DE BREVET EUROPÉEN

(45) Date de publication du fascicule du brevet : **14.09.83**

(51) Int. Cl.$^3$ : **H 04 N 7/16**

(21) Numéro de dépôt : **80400169.1**

(22) Date de dépôt : **04.02.80**

(54) **Système de vidéographie muni de moyens de contrôle d'accès à l'information.**

(30) Priorité : **06.02.79 FR 7902994**

(43) Date de publication de la demande : **20.08.80 Bulletin 80/17**

(45) Mention de la délivrance du brevet : **14.09.83 Bulletin 83/37**

(84) Etats contractants désignés : **BE DE GB IT NL SE**

(56) Documents cités :
**EP A 0 014 653**
**FR A 2 117 478**
**FR A 2 316 821**
**FR A 2 448 825**
**FR A 2 448 826**

(73) Titulaire : **Etablissement Public de Diffusion dit "Télédiffusion de France"**
**21-27 rue Barbès**
**F-92120 Montrouge (FR)**

**L'Etat Français représenté par le Secrétaire d'Etat aux Postes et Télécommunications**
**(Centre National d'Etudes des Télécommunications)**
**38-40 rue du Général Leclerc**
**F-92131 Issy-les-Moulineaux (FR)**

(72) Inventeur : **Guillou, Louis Claude**
**7, rue de l'Ise**
**F-35230 Bourgbarre (FR)**

(74) Mandataire : **Mongrédien, André et al**
**c/o BREVATOME 25, rue de Ponthieu**
**F-75008 Paris (FR)**

**EP 0 014 652 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Système de vidéographie muni de moyens de contrôle d'accès à l'information

La présente invention a pour objet un système de vidéographie muni de moyens de contrôle d'accès à l'information. La vidéographie est un procédé de télécommunication permettant de présenter à un usager des messages alphanumériques ou graphiques sur un écran de visualisation.

Elle trouve une application dans la transmission et l'affichage d'informations sur des récepteurs de télévision à des fins quelconques de distraction, d'information, ou d'enseignement. L'invention s'applique essentiellement au système dit « ANTIOPE » (Acquisition Numérique et Télévisualisation d'Images Organisées en Pages d'Ecriture), et au système dit « TITAN » (Terminal Interactif de Télétexte à Appel par Numérotation). On sait qu'il s'agit essentiellement, pour le premier, d'un système de vidéographie diffusée (donc unidirectionnel) permettant d'insérer sur des voies de télévision des informations alphanumériques organisées en pages et en magazines. Pour le second, il s'agit d'un système de vidéographie interactive (donc bidirectionnel) compatible avec le système ANTIOPE et permettant l'accès à des bases de données (informations générales, annuaires, etc...) et à des services interactifs (transactions, messages, enseignement) par le réseau téléphonique.

Dans le système ANTIOPE, la diffusion des informations s'effectue par une procédure dite « DIDON » (Diffusion de Données Numériques) qui est une procédure de diffusion par paquets, compatible avec la diffusion du signal de télévision.

De nombreux articles ou demandes de brevets ont déjà décrit ces systèmes. On se référera par la suite essentiellement au système ANTIOPE dont on pourra trouver une description détaillée, notamment dans les documents suivants :

— l'article de Y. GUINET intitulé « Etude comparative des systèmes de télétexte en radiodiffusion. Quelques avantages de la diffusion des données par paquets appliquée au télétexte » paru dans la revue de l'U.E.R. cahier Technique, n° 165, Octobre 1977, pages 242 à 253 ;

— l'article de B. MARTI et M. MAUDUIT intitulé « ANTIOPE, service de Télétexte » paru dans la revue « Radiodiffusion Télévision », 9e année, n° 40, novembre-décembre 1975, 5/5 pages 18 à 23 ;

— la « Spécification du système de télétexte ANTIOPE » éditée par le Centre Commun d'Etudes de Télévision et Télécommunications (CCETT) ;

— la demande de brevet français FR-A-2 313 825 publiée le 31.12.76 et intitulée « Système de diffusion de données » ;

— la demande de brevet français FR-A-2 363 949 publiée le 31.3.78 et intitulée « Système de transmission numérique et d'affichage de texte sur un écran de télévision » ;

— la demande de brevet français FR-A-2 365 843 publiée le 21.4.78 et intitulée « Perfectionnements aux systèmes de transmission numérique et d'affichage de textes sur un écran de télévision » ;

— la demande de certificat d'addition français FR-A-2 393 480 publiée le 29.12.1978 et intitulée « Système de diffusion de données ».

Le système ANTIOPE étant ainsi largement connu, il ne sera pas décrit ici en détail. On se bornera à en rappeler les principes essentiels, dans le but de faciliter la compréhension de l'invention. Pour tout détail de conception ou de réalisation, on pourra toujours se reporter aux documents cités plus haut, qui eux-mêmes renvoient à d'autres, tous ces documents devant être considérés comme incorporés à la présente description.

La figure 1 rappelle très schématiquement les éléments essentiels d'un système de télétexte ANTIOPE. Un tel système comprend un centre d'émission 2 et des postes récepteurs 4, 4', etc.

Le centre d'émission reçoit des informations d'une ou de plusieurs sources 5 et il comprend :

— un moyen 6 de composition d'un magazine constitué de pages organisées en rangées de caractères, si cette composition n'a pas déjà été effectuée par le dépositaire de l'information ;

— un circuit 10 de mémorisation du magazine sous forme de signaux numériques groupés en octets (8 éléments binaires) ;

— une jonction 11 reliée au circuit 10 ;

— un multiplexeur 12 de diffusion servant à la constitution de paquets d'octets et à l'insertion des informations dans les lignes d'un signal de télévision, ce moyen mettant en œuvre la procédure DIDON évoquée plus haut.

Chaque poste récepteur comprend :

— un circuit 14 de réception et de démodulation dudit signal de télévision ;

— une voie 16 de traitement des signaux vidéo d'image ;

— une voie 18 de traitement des signaux numériques, cette voie comprenant notamment un décodeur de données numériques, et enfin,

— un organe 20 de visualisation.

Dans un tel système, le flux d'informations depuis les dépositaires d'informations jusqu'aux centres de diffusion présente les caractéristiques générales suivantes.

La source 5, qui est une banque de données dépositaires d'informations est, par exemple, un service météorologique, la Bourse, une agence d'informations, etc. Cette banque alimente le moyen de composition 6 qui met ces informations en page au format ANTIOPE.

Pour fixer les ordres de grandeur, on peut indiquer que, dans le cas d'un magazine expérimental réalisé pour les valeurs boursières, on peut trouver environ 80 pages contenant en moyenne 800 octets,

soit au total 64 000 octets. Un tel magazine boursier utilise une ressource de 10 lignes par trame. Une ligne de télévision dure 64 µs et peut véhiculer 32 octets utiles, et il y a 50 trames par seconde. Ainsi, la ressource de une ligne/trame permet de transmettre $50 \times 32 \times 8 = 12\,800$ b/s (éléments binaires par seconde). L'ensemble d'un tel magazine est donc transmis en $64 \times 8/12{,}8 \times 10 = 4$ secondes, ce qui signifie que le magazine est transmis cycliquement avec une période de 4 secondes.

On observera qu'une ligne interactive reliant le centre de diffusion au dépositaire de l'information fonctionne typiquement à 4 800 b/s et que c'est cette différence de vitesse par rapport à la diffusion à 12 800 b/s qui explique la nécessité d'une mémorisation de l'information au niveau de la source de diffusion.

Dans le système ANTIOPE, les octets véhiculant l'information sont notés traditionnellement de la manière suivante :

| | j | | | k | | | |
|---|---|---|---|---|---|---|---|
| $b_8$ | $b_7$ | $b_6$ | $b_5$ | $b_4$ | $b_3$ | $b_2$ | $b_1$ |
| Imparité | Poids forts | | | Poids faibles | | | |

où l'élément binaire $b_8$ est un élément d'imparité, autrement dit un élément tel que le nombre total de « 1 » figurant dans l'octet soit impair.

Selon cette notation, l'octet (j/k) = (4/7) correspond ainsi à l'octet 11000111.

Les octets se divisent en octets de commande et en octets de données. Les octets de commande indiquent notamment des en-têtes et des fins de pages ainsi que des en-têtes et des fins de rangées. Les octets de données, insérés entre des octets de commande, correspondent à des caractères contenus dans les rangées. Tous ces octets, qu'ils soient de commande ou de données, comprennent un élément binaire de poids fort qui est un élément d'imparité.

L'ensemble des codes, identifiés par de tels octets, s'organise selon un tableau qui est le suivant :

| $b_4$ | $b_3$ | $b_2$ | $b_1$ | | | | | | | | | |
|---|---|---|---|---|---|---|---|---|---|---|---|---|
| | | | | $b_7$ | 0 | 0 | 0 | 0 | 1 | 1 | 1 | 1 |
| | | | | $b_6$ | 0 | 0 | 1 | 1 | 0 | 0 | 1 | 1 |
| | | | | $b_5$ | 0 | 1 | 0 | 1 | 0 | 1 | 0 | 1 |
| | | | | k \ j | 0 | 1 | 2 | 3 | 4 | 5 | 6 | 7 |
| 0 | 0 | 0 | 0 | 0 | | | | | | | | |
| 0 | 0 | 0 | 1 | 1 | | | | | | | | |
| 0 | 0 | 1 | 0 | 2 | | | | | | | | |
| 0 | 0 | 1 | 1 | 3 | | | | | | | | |
| 0 | 1 | 0 | 0 | 4 | | | | | | | | |
| | | | | | | | | | | | | |
| 1 | 1 | 1 | 1 | 15 | | | | | | | | |

Dans ce tableau :

— les colonnes 0 et 1 qui correspondent aux octets dont les 6[e] et 7[e] éléments binaires sont nuls ($b_6 = b_7 = 0$), contiennent des octets de commande ;

— les colonnes 2 et 3 contiennent essentiellement des nombres et des signes de ponctuation ;

— les colonnes 4 et 5 contiennent principalement des majuscules,

— les colonnes 6 et 7 contiennent principalement des minuscules.

A titre d'exemple, une page courante d'information, accessible à l'usager se présente sous la forme suivante :

1. Elle contient tout d'abord un en-tête de page, qui se compose des codes de commande (ETX) FF RS $NP_1$ $NP_2$ $NP_3$ :

où

ETX est un code qui termine la page précédente,

FF est un code qui indique une nouvelle page,

RS est un drapeau de page,

$NP_1$, $NP_2$, $NP_3$ sont des codes indiquant un numéro de page allant de 001 à 999.

2. Après l'en-tête de page, figure une rangée « zéro » : US OO $C_1C_2C_3$ ... RC LF,

où

US est un drapeau de rangée,

OO indique le rang zéro,

$C_1$, $C_2$, $C_3$ sont des codes complémentaires,

RC LF terminent la rangée.

La rangée zéro peut contenir aussi un nom de service, une date, une heure et éventuellement des indications de taxation. Cette rangée zéro ne véhicule pas d'information constituant le service. Elle fait partie de la procédure.

3. Après la rangée zéro, viennent des rangées d'information comprenant d'abord un en-tête de rangée qui se compose des codes (RC LF) US $NR_1$ $NR_2$,

où

RC LF terminent la rangée précédente,

US est un drapeau de rangée,

$NR_1$, $NR_2$ constituent le numéro de rangée qui va de 01 à 24,

viennent ensuite des octets de données $d_1$, $d_2$ ... $d_n$. Ces octets sont insérés entre l'en-tête de la rangée courante et soit une fin de rangée — début d'une autre rangée — soit une fin de page. Ces octets $d_1$, $d_2$ ... $d_n$ représentent l'information constituant le service diffusé. L'élément d'information dans un tel système est donc la rangée visualisable.

Il existe également d'autres pages que ces pages courantes d'information. Elles sont accessibles fonctionnellement par l'intermédiaire des codes complémentaires $C_1$, $C_2$, $C_3$ contenus dans la rangée zéro. Ce sont par exemple des pages de garde et d'alarme. Toutes ces pages font partie de la procédure. Il existe enfin une page de sommaire que l'on peut considérer comme faisant partie des données.

Ces rappels à propos du système ANTIOPE étant effectués, on peut aborder maintenant le problème que se propose de résoudre la présente invention.

L'avènement des services de type ANTIOPE ou TITAN soulève la question de leur taxation, c'est-à-dire de la mise en œuvre d'un système permettant l'identification et le contrôle des audiences. Cette question se pose d'ailleurs plus généralement pour tout service diffusé tendant à rentabiliser les réseaux de diffusion par une meilleure utilisation des ressources.

Une taxation de type à abonnement constitue une relation à la fois souple et durable entre un service et ses usagers. C'est en diffusion surtout qu'un tel mode de taxation trouve sa justification.

Une taxation de type à la consommation peut également être retenue ; ce mode de taxation est fondamental pour les systèmes « interactifs » (dans lesquels un dialogue s'instaure entre l'abonné et la source d'information, comme c'est le cas pour TITAN) ; mais il reste secondaire dans les systèmes à diffusion (dans lesquels les informations sont transmises de manière unidirectionnelle vers des abonnés, comme c'est le cas pour ANTIOPE).

Des systèmes intermédiaires, dits « quasi interactifs » peuvent se présenter, dans lesquels on modifie sans cesse le contenu de la source de diffusion pour satisfaire aux requêtes des usagers qui sont transmises par un réseau public de données. L'avènement des nouveaux moyens de diffusion à très grande capacité (satellites) développera beaucoup ce mode quasi interactif, rendant alors nécessaire la mise en œuvre d'un système de contrôle de l'accès à l'information offerte.

Ce problème du contrôle d'accès pose avant tout celui du verrouillage de l'information à l'émission et du déverrouillage à la réception.

On connaît des systèmes de transmission d'informations utilisant un canal de télévision munis de tels systèmes de verrouillage-déverrouillage. La demande FR-A-2 316 821 décrit un système de ce genre comprenant, à l'émission un circuit de verrouillage actionné par une clé et, à la réception un circuit de déverrouillage actionné par la même clé. Ces deux circuits comprennent un générateur de suite pseudo-aléatoire et un circuit OU-exclusif à deux entrées, l'une reliée au générateur de suite pseudo-aléatoire et l'autre recevant l'information à verrouiller (à l'émission) ou à déverrouiller (à la réception).

Cette structure générale est utilisée dans la présente invention mais avec des moyens particuliers qui tiennent compte de la spécificité des informations numériques véhiculées dans le système visé, notamment dans le système ANTIOPE.

On sait en effet que les messages traduits dans le langage ANTIOPE sont caractérisés par une importante redondance, de manière que soit minimisée l'incidence des erreurs de transmission sur l'intelligibilité de l'information diffusée. C'est ainsi que les textes alphabétiques sont intrinsèquement très redondants ; de même que la plupart des dessins en semi-graphique ; que les commandes de visualisation de caractères utilisent des caractères d'échappement ; que les numérotations de pages et de lignes mettent en œuvre des codes de Hamming ; que tous les octets constituant un magazine sont transmis avec imparité, etc.

Les moyens de recouvrement de l'intelligibilité d'une information préalablement verrouillée constituent en quelque sorte une « serrure électronique », et seule la mise en œuvre d'une clé appropriée permet de recouvrer l'intelligibilité de l'information verrouillée.

La première question qui se pose alors, est celle de la place à attribuer à cette serrure électronique dans le système à contrôler. En effet, dans le cas du système de télétexte, deux procédures sont mises en jeu : la procédure de transport (DIDON) et la procédure de service (ANTIOPE). A quel niveau de procédure doit-on disposer cette serrure ?

L'invention répond à cette question en proposant une serrure qui est attachée au niveau du service. Cette façon de procéder présente plusieurs avantages. Elle respecte tout d'abord les contraintes de synchronisation et de non propagation des erreurs de transmission. De plus, elle est indépendante du

réseau de transport utilisé. Enfin, elle ne demande aucun réaménagement des normes ANTIOPE existantes et s'accomodera d'une éventuelle évolution de ces normes.

En d'autres termes, et selon une première caractéristique de l'invention, le verrouillage de l'information constituant un magazine ANTIOPE est effectué au niveau de la source de diffusion. De façon plus précise, les moyens de verrouillage se situent en amont du multiplexeur DIDON qui, sur le schéma de la figure 1, porte la référence 12.

Une place ayant été assignée au verrouillage, reste la question de l'objet auquel s'applique ce verrouillage.

L'invention répond à cette seconde question en proposant un moyen dont la fonction est de verrouiller exclusivement l'information véhiculée dans les rangées visualisables des pages ordinaires du magazine. En d'autres termes, le verrouillage n'affecte pas les codes de commande figurant dans les colonnes 0 et 1 du tableau des codes indiqué plus haut et notamment, les codes ETX, FF, RS, RC, LF et US. Il n'affecte que les codes de données $d_1$, $d_2$, etc. C'est là la seconde caractéristique de l'invention.

Enfin, l'invention se propose de résoudre un troisième problème qui est celui du respect de l'imparité des octets diffusés.

Tous ces buts sont atteints par l'utilisation, selon l'invention, d'un automate de verrouillage qui comprend un moyen pour former une suite d'octets chiffrants dont les éléments binaires, notés $c_1$ à $c_8$ sont engendrés de la manière suivante :

— $c_1$, $c_2$, $c_3$, $c_4$ et $c_5$ sont prélevés à la sortie d'un générateur de suite pseudo-aléatoire, réinitialisé au début de chaque rangée visualisable par une clé de service K et par les numéros de la page et de la rangée considérée ;

— $c_6$ et $c_7$ sont à zéro, et

— $c_8$ est un élément de parité.

Ainsi, la suite chiffrante obtenue est composée d'octets pairs. Ces octets sont notés $C_1$, $C_2 ... C_n$ ou, de façon générique $C_j$. Les octets constituant une rangée d'information avant verrouillage sont appelés octets clairs. Ils forment une suite notée $d_1$, $d_2 ... d_n$ ou de façon générique $d_j$. Ces octets sont impairs et ils sont verrouillés par les octets chiffrants selon les règles suivantes :

A chaque nouvel octet clair de la rangée visualisable, on prélève un octet de la suite chiffrante. Deux cas peuvent se présenter :

— Si l'octet clair appartient aux colonnes 0 et 1 du tableau des codes ($b_6 = b_7 = 0$) l'octet clair est transmis tel quel, et l'octet chiffrant n'est pas utilisé ;

— Si l'octet clair n'appartient pas aux colonnes 0 ou 1, alors l'octet clair et l'octet chiffrant sont combinés par un circuit logique « OU-exclusif » pour constituer un octet diffusé : $D_j = d_j \oplus C_j$, où le signe $\oplus$ représente l'opération logique « OU-exclusif ».

Du fait de la parité des octets chiffrants, les octets diffusés sont impairs, tout comme les octets clairs, ce qui répond bien à l'exigence posée plus haut.

En outre, l'opération « OU-exclusif » se traduit par une substitution à l'octet clair d'un octet diffusé appartenant au même groupe de colonnes que l'octet clair, à savoir :

— le groupe des colonnes 2 et 3 qui contient essentiellement les nombres et des signes de ponctuation,

— le groupe des colonnes 4 et 5 qui contient principalement des majuscules,

— et le groupe des colonnes 6 et 7 qui contient principalement des minuscules.

Enfin, les octets appartenant aux colonnes 0 et 1 ne sont pas modifiés, en particulier les octets correspondant aux codes ETX, FF, RS, RC, LF et US qui sont transmis tels quels. De plus, du fait de la nullité des 6^e^ et 7^e^ éléments binaires des octets chiffrants, il n'y a pas introduction de nouveaux octets appartenant à ces colonnes. La transparence souhaitée est donc assurée.

Ainsi, tous les buts énoncés plus haut sont-ils atteints par ce moyen de verrouillage mis en œuvre selon l'invention.

Pour renforcer le caractère d'inviolabilité de la serrure ainsi constituée, la clé de service K est avantageusement modifiée de manière aléatoire à des intervalles déterminés et relativement courts (par exemple de l'ordre de quelques minutes).

Il reste alors, à la réception, à déverrouiller l'information. Pour ce faire, le récepteur doit comprendre un générateur d'octets déchiffrants qui délivre des octets formés comme suit :

— les 5 éléments binaires de faible poids sont prélevés dans une suite quasi-aléatoire obtenue par un générateur réinitialisé à chaque en-tête de rangée par la clé de service K, par le numéro de page et par le numéro de rangée considérés ;

— les 6^e^ et 7^e^ éléments binaires sont nuls, et

— le 8^e^ élément binaire est forcé à zéro.

Les règles de déverrouillage sont analogues aux règles de verrouillage : à chaque nouvel octet reçu appartenant à une rangée verrouillée, un nouvel octet déchiffrant est engendré. Deux cas peuvent se présenter :

— Si l'octet reçu appartient aux colonnes 0 et 1, il est transmis tel quel aux circuits d'interprétation ;

— Si l'octet reçu n'appartient pas aux colonnes 0 et 1, (parce que ses 6^e^ et/ou 7^e^ éléments binaires ne sont pas nuls) il est combiné par un circuit OU-exclusif à l'octet déchiffrant avant la poursuite de l'interprétation.

L'interprétation du langage est donc intimement entrelacée avec le déverrouillage des rangées d'information, et la robustesse de la structure du langage ANTIOPE diffusé n'est pas affectée par les opérations de verrouillage.

Ces généralités sur l'invention ayant été exposées, la définition précise de l'objet de l'invention semble alors pouvoir être formulée conformément au texte de la revendication 1 actuelle.

De tels moyens de verrouillage et de déverrouillage permettent de résoudre de manière avantageuse le problème de la taxation évoqué plus haut. A cette fin, l'invention propose d'utiliser, en plus de la clé de service, dont le rôle vient d'être défini, des clés d'abonnement qui sont engendrées de manière aléatoire par un centre de gestion des taxations. Ces clés ont une durée de vie relativement longue (de 1 à 12 mois), par rapport à celle de la clé de service (qui est de l'ordre de quelques minutes).

Pour illustrer le fonctionnement de ce système à double clé, on peut prendre un exemple de schéma d'abonnement qui utiliserait quatre types d'abonnements : 1 mois, 3 mois, 6 mois et un an. En plus de sa durée, un abonnement est caractérisé par son mois de début. Avec un tel schéma, durant un mois donné et pour un service donné, il y a donc 22 clés d'abonnement susceptibles d'être utilisées par les usagers : une clé mensuelle, trois clés trimestrielles, six clés semestrielles et douze clés annuelles.

Chaque mois, le centre de gestion des taxations fournit à chaque centre de diffusion une liste de 22 clés d'abonnement en cours pour chaque service diffusé par ce centre. En outre, il fournit à des points de vente d'abonnements, une autre liste de 4 clés qui vont débuter le mois suivant (un mois, trois mois, six mois et un an), pour chaque service, avec les tarifs des abonnements.

Une machine appropriée, installée dans chaque point de vente, inscrit certaines de ces clés sous forme de blocs d'abonnements sur des supports prévus à cet effet (par exemple des cartes intelligentes de type « carte de crédit »). Ces cartes sont ensuite introduites par les usagers du service dans leur poste récepteur.

Pour chaque service payant, toutes les cinq minutes environ, une nouvelle clé du service K est engendrée au hasard, par chaque centre de diffusion intéressé. Ainsi, au cours d'une session d'un service (une heure ou quelques heures), quelques dizaines de clés de service peuvent se succéder.

Dès qu'un centre de diffusion engendre une nouvelle clé de service K, il calcule, pour chaque clé d'abonnement en cours $C_i$ pour ce service, un message $M_i$ par un algorithme $M_i = F_{C_i}(K)$, les clés $C_i$ jouant le rôle de paramètres.

Ainsi, pour un service doté du schéma d'abonnement indiqué plus haut, à tout instant, 22 messages différents sont en vigueur. La durée de vie d'un message est égale à celle de la clé du service K, et pour un service donné, à tout instant, il existe autant de messages qu'il y a de clés d'abonnement en cours.

L'ensemble des messages $M_i$ en vigueur constitue l'information de contrôle d'accès associée au service diffusé. Cette information de contrôle d'accès n'est évidemment pas verrouillée par la serrure électronique.

Une application particulière de ce système est prévue dans le cadre de la présente invention, aux systèmes ANTIOPE ou TITAN. En l'occurrence, les messages $M_i$ sont groupés dans une page spéciale, dite page de contrôle d'accès, qui est remise à jour à chaque changement de clé du service. La page de contrôle d'accès est diffusée cycliquement, comme les pages ordinaires d'information constituant le service. Elle n'est cependant pas verrouillée par la serrure électronique. La page de contrôle d'accès est lue systématiquement par le récepteur à la mise en relation avec le service, puis à chaque mise à jour de cette page, au cours de la consultation du service, mais elle n'est pas visualisable.

Les messages sont donc, en fait, des motifs de synchronisation primaire de la serrure et ces motifs sont interprétables par un algorithme fournissant la clé du service. Cet algorithme est de la forme : $K = G_{C_i}(M_i)$, et il est développé par un circuit de restitution (qui peut d'ailleurs faire partie du support d'abonnement, lequel contient déjà la clé d'abonnement $C_i$) à qui les messages $M_i$ sont fournis. Ce circuit fournit donc à l'automate de déverrouillage la clé du service K, qui lui permet de déverrouiller l'information reçue.

De toute façon, les caractéristiques et avantages de la présente invention apparaîtront mieux après la description qui suit, d'exemples de réalisation donnés à titre explicatif et nullement limitatif. Cette description se réfère à des dessins annexés sur lesquels :

la figure 1, déjà décrite, représente le schéma synoptique d'un système de télétexte ANTIOPE, conforme à l'art antérieur ;

la figure 2 représente le schéma synoptique d'un système selon l'invention ;

la figure 3 représente le schéma d'un circuit permettant de matérialiser un polynôme générateur primitif particulier ;

la figure 4 représente un générateur de suite pseudo-aléatoire constitué par une combinaison de trois circuits du type de la figure précédente ;

la figure 5 représente le schéma synoptique d'un générateur d'octets chiffrants ou d'octets déchiffrants ;

la figure 6 représente un diagramme illustrant les différents états que peut prendre un automate de verrouillage ;

la figure 7 illustre le schéma synoptique d'un système de télétexte muni des moyens de contrôle d'accès fonctionnant à l'aide de clés d'abonnement ;

la figure 8 représente les moyens mis en œuvre dans le centre de diffusion pour verrouiller

l'information ;

la figure 9 représente le schéma synoptique d'un récepteur selon l'art antérieur ;

la figure 10 représente le schéma synoptique des moyens à insérer dans le récepteur du type de la figure précédente pour effectuer le déverrouillage de l'information.

Le système de vidéographie de l'invention est représenté, sous la forme qu'il prend dans le cas du système ANTIOPE, par le schéma de la figure 2. Ce système comprend des éléments connus déjà représentés sur la figure 1, à savoir :

— dans le centre d'émission 2 :

un moyen 6 d'élaboration d'un magazine constitué de pages organisées en rangées de caractères, si ce moyen n'est pas déjà dans la source d'information,

un circuit 10 de mémorisation du magazine sous forme de signaux numériques,

une pluralité de jonctions 11 reliées au circuit 10, et

un multiplexeur 12 de diffusion servant à l'insertion des informations dans les lignes d'un signal de télévision,

— dans chaque poste récepteur 4 :

un circuit 14 de réception et de démodulation dudit signal de télévision,

une voie 16 de traitement des signaux vidéo d'image,

une voie 18 de traitement des signaux numériques contenant notamment un décodeur de signaux numériques, et

un organe de visualisation 20.

Selon l'invention, le système comprend en outre :

A. dans le centre d'émission 2 :

a) un générateur 22 délivrant un signal numérique représentant une clé de service K, cette clé changeant de manière aléatoire à des intervalles déterminés qui sont par exemple, de l'ordre de quelques minutes ;

b) un automate de verrouillage 24 comprenant :

i) un comparateur 28 à une entrée reliée au circuit 10 de mémorisation du magazine d'où il reçoit des octets clairs ; ce comparateur est apte à distinguer, parmi ces octets clairs, ceux dont les 7$^e$ et 6$^e$ éléments binaires sont nuls ; ce comparateur possède deux sorties 31 et 32, la première véhiculant ces octets à 7$^e$ et 6$^e$ éléments binaires nuls et qui est reliée au multiplexeur 12 de diffusion (à travers une jonction 11'), et la seconde véhiculant les octets clairs $d_j$ dont les 7$^e$ et/ou 6$^e$ éléments binaires ne sont pas nuls ;

ii) un circuit logique 34 de type OU-exclusif à deux entrées, l'une reliée à la deuxième sortie 32 du comparateur 28 d'où elle reçoit les octets clairs $d_j$ à 6$^e$ et 7$^e$ éléments binaires non nuls ; ce circuit logique possède une sortie qui véhicule des octets chiffrés impairs $D_j$, les octets chiffrés étant dirigés ensuite (à travers la jonction 11') vers le multiplexeur de diffusion 12 ;

c) un générateur 26 d'octets chiffrants $C_j$, commandé par l'automate 24 d'où il reçoit des octets indiquant les numéros de page et les numéros de rangées des données à transmettre et le signal correspondant à la clé de service K ; ce générateur d'octets 26 délivre, pour chaque octet de données $d_j$ d'une rangée visualisable, un octet chiffrant $C_j$, cet octet possédant un 8$^e$ élément binaire de parité et des 7$^e$ et 6$^e$ éléments binaires nuls, cet octet étant appliqué à la seconde entrée de la porte 34.

B. dans chaque poste récepteur 4 :

d) un circuit 36 délivrant un signal numérique représentant la clé de service K en cours dans le poste d'émission,

e) un automate de déverrouillage 38 comprenant :

i) un comparateur 42 à une entrée recevant les octets chiffrés ; ce comparateur est apte à distinguer, parmi ces octets chiffrés, ceux dont les 7$^e$ et 6$^e$ éléments binaires sont nuls, ce comparateur ayant deux sorties 43 et 44, la première véhiculant ces octets dont les 7$^e$ et 6$^e$ éléments binaires sont nuls, cette première sortie étant reliée à l'organe de visualisation 20, la seconde véhiculant les octets chiffrés $D_j$ dont les 7$^e$ et/ou 6$^e$ éléments binaires ne sont pas nuls,

ii) un circuit logique 46 de type OU-exclusif à deux entrées, l'une reliée à la sortie 44 du comparateur d'où elle reçoit les octets chiffrés $D_j$, ce circuit logique ayant une sortie qui véhicule des octets déchiffrés $d_j$, qui ensuite sont dirigés vers l'organe de visualisation 20.

f) un générateur 26' d'octets déchiffrants, commandé par l'automate de déverrouillage, d'où il reçoit les octets indiquant les numéros de page, les numéros de rangées des données transmises, et, le signal correspondant à la clé de service en cours K ; ce générateur d'octets déchiffrants possède une sortie 41 qui délivre, pour chaque octet chiffré reçu, un octet déchiffrant $C'_j$ possédant un élément binaire de poids fort qui est forcé à zéro et des 7$^e$ et 6$^e$ éléments binaires nuls, ces octets étant appliqués à la seconde entrée de la porte 46. On va décrire en détail les différents éléments de cet ensemble en commençant par les générateurs d'octets chiffrants 26, et déchiffrants 26' qui sont d'ailleurs quasi-identiques.

Le générateur d'octets chiffrants (ou déchiffrants) fait appel à un générateur de suite pseudo-aléatoire, lequel peut être de différents types. On peut utiliser, par exemple, un circuit de chiffrement par bloc monté en mode quasi-synchrone. A cette fin, on peut mettre en œuvre l'algorithme dit « D.E.S. » (Data Encryption Standard) décrit dans US Department of Commerce, NBS, FIPS, PUB 46, 15 janvier 1977.

Mais, on peut aussi engendrer une telle suite pseudo-aléatoire grâce à des polynômes générateurs combinés par une logique non linéaire et c'est ce cas particulier qu'on va décrire maintenant à l'aide des figures 3 et 4.

On rappellera tout d'abord quelques notions concernant ce type de polynômes et on indiquera ensuite un moyen de les obtenir.

La littérature spécialisée fournit des tables de polynômes irréductibles sur le corps de Galois de 2. Ces polynômes sont représentés de manière condensée par une suite de chiffres, par exemple « 642 015 ». La numérotation est faite en octal, de manière à ce que chaque chiffre représente trois éléments binaires, chaque élément représentant un coefficient du polynôme. Dans l'exemple du polynôme 642 015, les correspondances octal-binaire-coefficients du polynôme sont les suivantes :

| 6 | | | 4 | | | 2 | | | 0 | | | 1 | | | 5 | | |
|---|---|---|---|---|---|---|---|---|---|---|---|---|---|---|---|---|---|
| 1 | 1 | 0 | 1 | 0 | 0 | 0 | 1 | 0 | 0 | 0 | 0 | 0 | 0 | 1 | 1 | 0 | 1 |
| $x^{17}$ | $+x^{16}$ | | $+x^{14}$ | | | | $+x^{10}$ | | | | | | | $+x^3$ | $+x^2$ | | $+1$ |

Il s'agit donc d'un polynôme de degré 17 qui possède 7 termes.

En partant d'un ensemble de valeurs initiales de 17 éléments binaires non tous nuls ($a_o$, $a_1$, $a_2 \dots a_{16}$), on définit la suite engendrée par le polynôme 642 015, par la relation :

$$a_i = a_{1-1} + a_{i-3} + a_{i-7} + a_{i-14} + a_{i-15} + a_{i-17} \text{ modulo } 2 \text{ pour } i \geqslant 1.$$

La suite ainsi obtenue est périodique et de longueur maximale $2^{17} - 1$, et on dit alors que le polynôme générateur est primitif. Si $\alpha$ désigne une racine de ce polynôme, on peut montrer que l'ensemble 0, 1, $\alpha$, $\alpha^2$, $\alpha^3 \dots \alpha^{(2^{17}-1)}$ possède une structure de corps : c'est le corps muni des lois d'addition par OU-exclusif et de multiplication modulo le polynôme de Galois d'extension $CG(2^{17})$.

Pour illustrer la manière de mettre en œuvre de tels polynômes, on reprendra l'exemple du polynôme 642 015. Il peut être réalisé à l'aide de 17 bascules de type D et 6 portes « OU-exclusif », connectées comme il est indiqué sur la figure 3, où les bascules portent la référence 50 et les portes la référence 52.

L'interface avec l'extérieur comprend 4 connexions : une entrée 54, une sortie 56, une connexion d'horloge 58 et une remise à zéro 60. Il faut y ajouter une connexion d'alimentation et une connexion de masse non représentées.

L'intervalle de temps minimum $t_{min}$ entre deux coups d'horloge est lié au retard apporté à la propagation du signal dans les portes et les bascules. Dans le circuit de la figure 3, on a $t_{min} = 3$ retards porte + 1 retard bascule.

A titre indicatif, avec des circuits de type SN 74273 pris pour constituer les huit bascules D, le retard obtenu est de 23 ns, et avec des circuits SN 7486 pris pour constituer les quatre portes OU-exclusif, le retard obtenu est de 40 ns. La fréquence maximum d'horloge est alors de 7 MHz environ.

Le circuit de la figure 3 fonctionne de la manière suivante. Un ordre « remise à zéro » est d'abord émis pour imposer un état connu ; puis, le circuit est initialisé en présentant *n* éléments binaires sur la connexion d'entrée 54 en synchronisme avec *n* tops d'horloge sur la connexion d'horloge 58. Le générateur est ensuite prêt à fonctionner. Il délivre un élément binaire chaque fois qu'il reçoit un nouveau top d'horloge.

Pour augmenter la complexité de la suite obtenue et renforcer de ce fait le générateur, on peut combiner plusieurs polynômes de la manière suivante :

Soit trois polynômes primitifs, T, R et S. Il s'agit par exemple des polynômes :

T : 642 015 (degré t = 17),
R : 3 020 365 (degré r = 19),
S : 21 042 104 211 (degré s = 31).

On peut combiner ces polynômes par une relation logique non linéaire, par exemple $(R \cdot \bar{S}) \oplus (S \cdot T)$ où le point correspond à l'opération ET, la barre à l'opération NON et le signe $\oplus$ à l'opération OU-exclusif.

La période de la suite obtenue est égale au plus petit commun multiple entre $(2^t - 1)$, $(2^r - 1)$ et $(2^s - 1)$, dans l'exemple envisagé où les trois nombres $(2^{17} - 1)$, $(2^{19} - 1)$ et $(2^{31} - 1)$ sont premiers, la période est environ $1{,}4 \cdot 10^{17}$.

La complexité de la suite obtenue est égale à r(s + 1) + st, soit 19.32 + 31.17 = 1 135.

Ainsi, alors qu'un polynôme primitif de degré *r* a pour complexité *r*, ce qui signifie que tout état de l'automate permettant de l'obtenir est une combinaison linéaire des *r* racines du polynôme générateur, donc un élément du corps d'extension $CG(2^r)$, la complexité de l'ensemble $R \cdot \bar{S} \oplus ST$ est r(s + 1) + st, c'est-à-dire que tout état de l'automate ainsi constitué est un élément du corps d'extension $CG(2^{r(s+1)+st})$ et que l'automate linéaire équivalent et minimum possède r(s + 1) + st bascule D.

A propos de ces propriétés des combinaisons de polynômes, on pourra se reporter à l'article de Edwin L. KEY intitulé « Structure and Complexity of non-linear binary Sequence Generators » publié dans la revue I.EEE IT 22, N° 6, novembre 1976, pages 732 à 736.

La combinaison de polynômes en question s'obtient à l'aide du circuit 61 de la figure 4. Sur cette

figure, le circuit 62 engendre le polynôme T, le circuit 64 le polynôme R et le circuit 66 le polynôme S. Les portes 68 et 70 sont des portes ET, la seconde étant reliée au circuit 66 par une porte inverseuse 72 ; la porte 74 est une porte OU-exclusif. L'ensemble du circuit possède une entrée 76, une sortie 78, une connexion d'horloge 80 et une connexion de remise à zéro 82.

Ce moyen particulier apte à engendrer une suite pseudo-aléatoire ayant été décrit, on va aborder maintenant la description du générateur d'octets chiffrants (ou déchiffrants) qui utilise ce moyen.

La structure d'un tel générateur est représentée schématiquement sur la figure 5. Elle comprend essentiellement un générateur de suite pseudo-aléatoire 61 tel que celui qui vient d'être décrit à propos de la figure 4, un ensemble de huit bascules 84 de type D, reliées à un bus 86, et un séquenceur 88 relié également au bus 86 et au générateur 61 et qui gère les tops d'horloge et les entrées-sorties du circuit. L'interface avec l'extérieur est composé de 16 connexions respectivement :

— de sélection 91, de lecture 92, d'écriture 93 et de remise à zéro 94, pour ce qui est du contrôle,

— d'horloge 95, de chiffrage/déchiffrage 96, d'alimentation 97 et de masse 98 pour ce qui est de la mise en œuvre, et

— huit connexions de données $B_1$ à $B_8$ pour les entrées-sorties.

Avant de préciser le fonctionnement de ce circuit, il faut rappeler la différence qu'il y a entre les octets chiffrants utilisés dans le centre d'émission et les octets déchiffrants utilisés dans les postes récepteurs.

A l'émission, les octets chiffrants sont des octets pairs appartenant aux colonnes 0 et 1 du tableau donné plus haut ($c_6 = c_7 = 0$). Ainsi, la parité des octets chiffrés est la même que celle des octets clairs et l'on sait que ces octets sont impairs.

A la réception, l'élément binaire d'imparité des octets reçus est vérifié puis remplacé par un élément binaire de validation. Aussi, les octets déchiffrants comportent-ils un élément binaire de poids fort qui est forcé à zéro ($c_8 = 0$), ce qui les distingue des octets chiffrants qui possèdent un $8^e$ élément binaire de parité.

Dans ces conditions, le fonctionnement du circuit de la figure 5 est le suivant. Ce circuit peut recevoir trois ordres :

— « remise à zéro »,

— « lire », et

— « écrire ».

a) L'ordre « remise à zéro » se traduit par la remise à zéro des 75 bascules que comprend le circuit (8 bascules 84, 17 bascules dans le générateur 62, 9 dans le générateur 64 et 31 dans le générateur 66). Cet ordre permet de remettre l'automate dans un état connu ;

b) L'ordre « lire » se traduit par la prise en compte des données sur le bus 86 afin d'initialiser les huit bascules 84 de l'interface. Ces données sont transmises aux trois générateurs 62, 64 et 66 par huit tops d'horloge, ce qui produit huit éléments binaires nouveaux. Ces huit éléments binaires nouveaux sont utilisés comme suit :

les cinq premiers positionnent les cinq premières bascules 84 de l'interface,

les trois derniers sont « oubliés »,

les 6ème et 7ème bascules sont forcées à zéro,

la 8ème bascule impose la parité correcte si l'on est en position « chiffrement », et elle est forcée à zéro si l'on est en position « déchiffrement » pour les raisons qui viennent d'être rappelées ;

c) L'ordre « écrire » se traduit par l'affichage, sur le bus, des états des huit bascules 84. Ces huit bascules sont ensuite remises à zéro et huit tops d'horloge permettent de créer huit nouveaux éléments binaires utilisés comme pour l'ordre « lire ».

L'initialisation du générateur d'octets s'effectue à l'aide de la clé de service (qui est constituée de 64 éléments binaires, soit 8 octets notés $k_1$ à $k_8$) du numéro de rangée (qui varie de 1 à 24 et qui est codé sur deux octets notés $NR_1$ et $NR_2$) et du numéro de page (qui varie de 001 à 999 et qui est codé sur trois octets notés $NP_1$, $NP_2$ et $NP_3$).

Cette initialisation du générateur d'octets est pratiquée au début de chaque rangée d'information, à l'aide de 8 octets particuliers, obtenus à partir des huit octets qui définissent la clé du service et des cinq octets définissant le numéro de page et le numéro de rangée.

Ces huit octets sont, par exemple : $k_1 \oplus NR_1$, $k_2 \oplus NR_2$, $k_3 \oplus NP_1$, $k_4 \oplus NP_2$, $k_5 \oplus NP_3$, $k_6 \oplus NP_3$, $k_7 \oplus NR_1$, $k_8 \oplus NR_2$.

Ainsi, au début de chaque rangée d'information, le générateur d'octets subit les opérations suivantes :

— remise à zéro,

— lire ($k_1 \oplus NR_1$),

— lire ($k_2 \oplus NR_2$),

— lire ($k_3 \oplus NP_1$),

— lire ($k_4 \oplus NP_2$),

— lire ($k_5 \oplus NP_3$),

— lire ($k_6 \oplus NP_3$),

— lire ($k_7 \oplus NR_1$),

— lire ($k_8 \oplus NR_2$),

Ensuite, pour chaque octet de la rangée, l'ordre est donné au générateur d'écrire un nouvel octet. Il est essentiel d'engendrer systématiquement un octet chiffrant pour chaque octet d'information, afin de maintenir la synchronisation, malgré les erreurs de transmission.

En désignant par $d_1$, $d_2$, $d_3$ ... les octets clairs d'une rangée, par $C_1$, $C_2$, $C_3$ les octets chiffrants délivrés par le générateur et par $D_1$, $D_2$, $D_3$ ... les octets chiffrés, on a le tableau suivant de la suite des codes :

Octets clairs : US $NR_1$ $NR_2$ $d_1$ $d_2$ $d_3$ $d_4$ $d_5$ $d_6$ $d_7$ ...
Octets chiffrants : $C_1$ $C_2$ $C_3$ $C_4$ $C_5$ $C_6$ $C_7$ ...
Octets chiffrés : US $NR_1$ $NR_2$ $D_1$ $D_2$ $D_3$ $D_4$ $D_5$ $D_6$ $D_7$ ...

$$\text{avec } D_i = \begin{cases} d_i, \text{ si } d_i \text{ appartient aux colonnes 0 ou 1,} \\ d_i \oplus C_i \text{ si } d_i \text{ appartient aux colonnes 2 à 7.} \end{cases}$$

Le tableau de la suite des codes rencontrée au déchiffrement serait analogue avec permutation des lignes octets clairs et octets chiffrés.

Le générateur d'octets chiffrants ou déchiffrants ayant été décrit, on va aborder maintenant le principe de l'automate de verrouillage qui met en œuvre ce générateur. La structure de cet automate est illustrée sur la figure 2 déjà décrite. Son fonctionnement est le suivant.

L'automate de verrouillage reçoit, du circuit 10, une suite d'octets qui modifient à chaque fois sa situation. Cette situation est définie par trois paramètres, qui dépendent respectivement du numéro de page reçu (lequel varie entre 001 et 999), du numéro de rangée (lequel va de 00 à 24) et de son « état », lequel peut prendre six formes différentes :

— Etat 0 : l'automate attend un début de page ;
— Etat 1 : l'automate laisse passer le numéro de la page ($NP_1$ $NP_2$ $NP_3$) en l'enregistrant ;
— Etat 2 : l'automate attend un début de rangée ;
— Etat 3 : l'automate laisse passer le numéro de la rangée ($NR_1$ $NR_2$) en l'enregistrant ;
— Etat 4 : l'automate chiffre la rangée d'information après avoir réinitialisé le générateur d'octet ;
— Etat 5 : l'automate laisse passer la rangée zéro (le rôle de cette rangée zéro sera analysé plus loin).

La figure 6 illustre l'évolution de l'automate en fonction de la nature des octets qu'il reçoit. Les notations FF, RS, US ont déjà été définies. Les différents états de l'automate sont représentés par des chiffres cerclés correspondant à la liste précédente (les états 1 et 3 sont en traits mixtes pour les distinguer des autres car il s'agit d'états passifs). Au début du fichier, l'automate est dans l'état 0 (à gauche du diagramme). Si l'octet reçu est différent de RS, l'automate reste dans cet état 0. D'où la flèche qui part du 0 cerclé et qui y revient. Lorsque l'octet reçu est un octet RS (correspondant à un drapeau de page), l'automate passe dans l'état 1 et laisse passer le numéro de rangée en l'enregistrant ; puis il passe à l'état 2 où il attend un début de rangée, etc.

Finalement, le seul état où l'automate effectue un chiffrement est l'état 4 où il traite une range d'informations d'une page accessible par numérotation.

En entrant dans l'état 4, l'automate de verrouillage réinitialise le générateur d'octets chiffrants par 9 ordres successifs : un ordre « remise à zéro », suivi par 8 ordres « lire », comme il vient d'être décrit. Ensuite, l'automate de verrouillage engendre un nouvel octet chiffrant C pour chaque nouvel octet clair d. Si l'octet clair d n'a pas ses 6e et 7e éléments binaires à zéro, l'automate reste dans l'état 4 et verrouille cet octet par $d \oplus C$ puis va saisir un nouvel octet. Si l'octet clair d est un octet de commande ($b_6 = b_7 = 0$), quatre cas se présentent :

— l'octet clair est un « US » (drapeau de rangée) : l'automate passe à l'état 3 ;
— l'octet clair est un « FF » (fin de page) ; l'automate passe à l'état 0 ;
— l'octet clair est un « RS » (drapeau de page) ; l'automate passe à l'état 1 ;
— l'octet clair n'est ni « US » ni « FF », ni « RS », l'automate reste à l'état 4.

De toute façon, dans ces cas là, l'octet clair est transmis tel quel, et l'automate va saisir un nouvel octet.

Après avoir décrit les moyens de verrouillage et de déverrouillage qui sont l'objet de la présente invention, on va décrire des moyens qui peuvent être utilisés en combinaison avec les premiers moyens.

La figure 7 illustre le schéma synoptique du système de l'invention muni de ces moyens de contrôle d'accès. Tel que représenté, ce système comprend, en plus des éléments qui ont déjà été décrits à propos de la figure 2 :

A. un centre de gestion d'abonnements 100 qui engendre des signaux numériques correspondant aux clés d'abonnement $C_i$, ces clés changeant de manière aléatoire à intervalles longs de l'ordre du mois et selon des schémas analogues à celui qui a été indiqué plus haut à titre d'exemple ;

B. dans le centre d'émission :

— un circuit 102 de formation de messages $M_i$ qui reçoit du circuit 100 les signaux correspondant auxdites clés d'abonnement $C_i$ et du générateur 22 le signal correspondant à la clé de service K. Ces messages sont obtenus à l'aide d'un algorithme $F_{C_i}(K)$ paramétré par les $C_i$, qui sera explicité plus loin. Le circuit 102 délivre autant de messages $M_i$ qu'il y a de clés d'abonnement $C_i$, ces messages changeant avec la clé de service K. L'ensemble de ces messages est organisé en une page spéciale dite page de contrôle d'accès. Cette page est transmise cycliquement par le multiplexeur 12, mais n'est pas visualisable ; sa structure sera indiquée plus loin ;

C. dans chaque poste récepteur :

i) un support d'abonnement 106 qui contient une mémoire 108 dans laquelle est inscrit au moins un bloc d'abonnement représentant l'une des clés d'abonnement $C_i$ ;

j) un circuit 110 de restitution de la clé de service K, relié, d'une part, au décodeur de signaux numériques du circuit 14 d'où il reçoit l'ensemble des messages $M_i$ constituant la page de contrôle d'accès, et d'autre part, à la mémoire 108 du support d'abonnement d'où il reçoit la clé d'abonnement $C_i$. Ce circuit 110 développe un algorithme $K = G_{C_i}(M_i)$ qui permet de restituer le signal correspondant à la clé de service K employée dans le poste d'émission ; cet algorithme sera explicité plus loin ;

D. au moins un poste de chargement 112 relié au centre de gestion d'abonnement 100 d'où il reçoit les signaux correspondant aux différentes clés d'abonnement $C_i$ engendrées par ce centre ; chacun de ces postes est apte à recevoir temporairement des supports d'abonnement et à inscrire dans leur mémoire 108 l'une des clés d'abonnement $C_i$.

On va décrire maintenant la manière de composer la page de contrôle d'accès, à partir de clés d'abonnement $C_i$ et de la clé de service K. Pour cela, on décrira tout d'abord la structure des signaux numériques représentant les clés d'abonnement, puis on exposera l'algorithme de calcul des messages et on donnera enfin la constitution de la page de contrôle d'accès.

Les clés d'abonnement sont engendrées au centre de gestion des abonnements 100 qui fournit des listes aux centres d'émission 2 et aux postes 112 de chargement des cartes.

De façon plus précise, le centre de gestion des abonnements fournit :

— au centre d'émission :

les clés d'abonnement en cours pour les services qui le concernent ainsi que les consignes d'exploitation sur la durée de vie à donner à K la clé de service ;

— aux postes de chargement des cartes :

les blocs d'abonnement à vendre pour les services qui les concernent ainsi que les tarifs à appliquer.

Un bloc d'abonnement est composé par exemple de quatre champs :

1) un « code de service » de 16 éléments binaires qui désigne le service considéré,

2) un « indice d'abonnement » de 8 éléments binaires qui caractérise un abonnement pour un service considéré. Deux de ces éléments binaires indiquent le type d'abonnement (1, 3, 6 ou 12 mois) et les six autres indiquent le mois de début d'abonnement (1 à 60 modulo 5 ans),

3) une « clé d'abonnement » de 128 éléments binaires qui est l'information fondamentale du bloc,

4) un « code de redondance cyclique » de 16 éléments binaires.

Ce code porte sur les 152 éléments binaires précédents et permet de vérifier le bloc d'abonnement avant d'en faire usage.

Un bloc d'abonnement est donc composé de 168 éléments binaires, soit 21 octets. Un tel bloc peut aisément être inscrit dans un support genre « carte de crédit » qui serait muni d'une mémoire PROM (Programmable Read Only Memory) d'une capacité de 4 096 éléments binaires utilisables à cette fin. Une telle carte pourrait accueillir jusqu'à 24 blocs d'abonnement ayant les caractéristiques indiquées.

Le calcul des messages à partir des clés d'abonnement $C_i$ et de la clé K est effectué dans le centre d'émission par le circuit 102 qui est organisé autour d'un microprocesseur. Ce circuit est programmé pour mettre en œuvre un algorithme qui s'appuie sur deux corps de Galois ayant pour caractéristiques les nombres premiers de Mersenne $2^{61} - 1$ et $2^{127} - 1$. Cet algorithme utilise les clés d'abonnement $C_i$ (127 éléments binaires) et la clé du service K (56 éléments binaires), de la manière suivante :

1. on forme un mot $\pi$ de redondance de confusion qui comprend 61 éléments binaires engendrés au hasard à chaque mise en œuvre de l'algorithme ;

2. on calcule $\pi^{-1}$, inverse de $\pi$ modulo $2^{61} - 1$ par un programme arithmétique utilisant une variante de l'algorithme d'Euclide ;

3. on effectue une première multiplication par un autre programme arithmétique : $\nu = K \cdot \pi^{-1}$ modulo $(2^{61} - 1)$ ;

4. on calcule $\gamma$, inverse de C modulo $2^{127} - 1$, par un programme similaire à celui de 2. ;

5. enfin, on calcule le message par un programme similaire à 3. : $M = \gamma \cdot (\upsilon + 2^{64} \cdot \pi)$ modulo $(2^{127} - 1)$.

Les programmes nécessaires à ces calculs peuvent être développés par un microprocesseur du type 8080, de la Société INTEL.

La structure de la page de contrôle d'accès qui rassemble de tels messages est la suivante :

...(ETX) FF RS $NP_1$ $NP_2$ $NP_3$
US O O $C_1$ $C_2$ $C_3$ $C_4$ < bloc d'en-tête >
RC LF US $NR_1$ $NR_2$ < bloc d'accès >
RC LF US $NR_1'$ $NR_2'$ < bloc d'accès
-----------------------------------
RC LF US $NR_1^i$ $NR_2^j$ < bloc d'accès > ETX (FF).

Les codes qui ouvrent la page ont déjà été définis. La rangée zéro (US OO) commence par trois codes complémentaires $C_1$, $C_2$ et $C_3$ traditionnellement destinés à permettre l'insertion de pages fonctionnelles dans les magazines.

Pour indiquer que cette page particulière est une page de service à ne pas visualiser, le quatrième élément binaire de $C_2$ est à 1. Un quatrième octet de code complémentaire $C_4$ est utilisé avec $b_1 = b_2 = b_3 = b_4 = 1$ pour identifier la page de contrôle d'accès.

Cette page est modifiée chaque fois que l'on change K, la clé de service. Pour signaler cet événement, on fait usage du 4$^e$ élément binaire de $C_1$, traditionnellement utilisé pour indiquer une nouvelle mise à jour, et qui est porté à 1 pendant une période suivant immédiatement cette mise à jour.

La rangée zéro se poursuit par un bloc d'entête qui comprend le code du service (16 éléments binaires), le mois en cours (6 éléments binaires) et un code de redondance cyclique de 16 éléments binaires.

Viennent ensuite les différentes rangées de la page de contrôle d'accès. Ces rangées débutent par un numéro de rangée suivi d'un bloc d'accès, et il y a autant de blocs d'accès (donc de rangées) qu'il y a de blocs d'abonnement. La numérotation de ces rangées peut avantageusement être la suivante.

Comme il a été exposé plus haut, pour un service donné, un bloc d'abonnement est caractérisé par un indice d'abonnement qui se compose d'un code à 8 éléments binaires. De même, il a été indiqué qu'à un moment donné, il pouvait y avoir 22 blocs d'abonnement en cours, si l'on retient le schéma d'abonnement indiqué plus haut pour 24 rangées disponibles.

Or, un numéro de rangée s'étend sur 2 octets possédant chacun 4 éléments binaires utiles (les quatre autres constituent un code de Hamming) soit au total également 8 éléments binaires. Il en résulte qu'il est possible de prendre l'indice d'abonnement comme numéro de rangée dans la page de contrôle d'accès.

Par conséquent, dans une variante avantageuse, le numéro d'une rangée de la page de contrôle d'accès donne l'indice de l'abonnement auquel se rapporte le bloc d'accès qui suit.

Quant auxdits blocs d'accès, ils se composent de deux champs :

1) un message de 127 éléments binaires utiles plus 1 élément binaire à zéro,

2) un code de redondance cyclique de 16 éléments binaires.

Un bloc d'accès comprend donc 144 éléments binaires utiles qui s'étendent sur 24 octets à raison de 6 éléments binaires utiles, complétés par $b_7 = 1$ et $b_8$ en imparité.

Ayant décrit l'organisation générale du système de l'invention, on va décrire maintenant plus en détail les moyens particuliers qu'il faut insérer dans le centre de l'émission et dans les postes récepteurs, pour pouvoir effectivement contrôler l'accès à l'information, selon le processus qui vient d'être décrit. On s'intéressera tout d'abord aux moyens disposés dans le centre d'émission pour aborder ensuite ceux des postes récepteurs.

Dans le centre d'émission, ces moyens s'insèrent entre la source de diffusion (circuit 10 sur la figure 2) et le circuit émetteur (multiplexeur DIDON 12 sur cette même figure 2), deux jonctions 11 et 11' les encadrant. Ces moyens sont illustrés en détail sur la figure 8. Le circuit représenté sur cette figure comprend deux ensembles :

1) un ensemble lent 120 (constitué en pratique par un microprocesseur convenablement programmé et interfacé) qui comprend un circuit 122 qui assure le contrôle et la gestion des horloges (durée de vie de la clé de serrure K, décision d'insertion des pages de contrôle d'accès) et un circuit 124, pour la composition de la page de contrôle d'accès, ce circuit recevant les messages $M_i$ du circuit 102 déjà mentionné. Les circuits 122 et 102 sont reliés à un générateur aléatoire 134. L'opérateur fournit à cet ensemble 120 les consignes horaires d'exploitation par une connexion 126 et les blocs d'abonnement en cours au début de chaque session du service considéré, par une connexion 128. Cet ensemble lent est interfacé par deux mémoires : la mémoire 130 qui contient K, la clé de service, et la mémoire 132 qui contient la page de contrôle d'accès. Des connexions de contrôle non représentées permettent de véhiculer les ordres : verrouillage-arrêt, insertion de la page de contrôle d'accès, lecture de K, acquittement sur fin de page de magazine, acquittement sur fin de page de contrôle d'accès et bien sûr, remise à zéro.

2) un ensemble rapide 134 (constitué par une logique câblée permettant des débits de l'ordre de 20 k octets/seconde) qui comprend l'automate de verrouillage 24 déjà décrit et le générateur d'octets chiffrants 26, dont la structure et le fonctionnement ont été exposés plus haut à propos de la figure 5.

L'intérêt du montage décrit est que l'exploitant est maître de la vie de la clé de service K, et des instants d'insertion de la page de contrôle d'accès dans le magazine verrouillé.

Avant d'en venir aux moyens à insérer dans chaque poste récepteur pour permettre l'accès à l'information, il est nécessaire de préciser la structure de ce récepteur telle qu'on la trouve dans le système ANTIOPE classique, structure qui n'avait été qu'ébauchée sur les figures 1 et 2.

Cette structure est représentée sur la figure 9 qui correspond à la figure 2 de la demande de brevet français déjà mentionnée FR-A-2 363 949.

Le récepteur illustré sur la figure 9 comporte les grands blocs fonctionnels déjà mentionnés sur les figures 1 et 2, à savoir : un circuit de réception et de démodulation 14, une voie 16 de traitement des signaux image, une voie 18 de traitement des signaux numériques et un moyen de visualisation 20. Le circuit 14 délivre d'une part, le son à un haut-parleur 15, et d'autre part, le signal vidéo à un décodeur de couleur et générateur de balayage 19. Les signaux de couleur $B_1$, $V_1$ et $R_1$, ainsi que la luminance $L_1$ issus du circuit 19 sont transmis au tube 140 à travers un commutateur vidéo 141.

Le poste récepteur illustré, comporte dans la voie 18 de traitement des signaux numériques, un séparateur vidéo-données 142 (qui fonctionne selon la procédure DIDON pour extraire une suite d'octets

du signal analogique) dont l'entrée est reliée à la sortie vidéo du circuit 14. Ce séparateur a sa sortie reliée à un circuit de première sélection 143 (qui fonctionne lui aussi selon la procédure DIDON, de manière à extraire les octets véhiculés dans une voie numérique) semblable à l'équipement terminal décrit dans la demande de brevet FR-A-2 313 825 déjà citée. La sortie du circuit 143 est reliée par une jonction 144 du type décrit dans la demande de brevet français FR-A-2 268 308 publiée le 14-11-75 à un circuit sélecteur de page et décodeur de données 145 dont la sortie est reliée à l'entrée d'une mémoire de pages 146. Un clavier d'abonné 147 est relié aux entrées de commande des blocs 143 et 145 et au commutateur 141. La sortie de la mémoire 146 est reliée à l'entrée d'un générateur de caractères 148. Les sorties de signaux du générateur 148 sont reliées aux entrées de couleur $R_2$, $V_2$ et $B_2$ du commutateur vidéo 141, ainsi qu'à une entrée de luminance $L_2$.

Le fonctionnement de ce circuit étant déjà décrit dans la demande FR-A- 2 363 949 déjà citée, il ne sera pas réexposé ici. On rappellera simplement qu'à la sortie du circuit DIDON analogique 142, les données sont des octets structurés en paquets enveloppés par une procédure de huit octets d'en-tête, dont trois octets de numéro de voie. Le circuit DIDON numérique 143 sélectionne une voie numérique, c'est-à-dire laisse passer les données utiles des paquets sélectionnés, d'après leur numéro de voie.

La jonction 144 ne joue pas un rôle essentiel dans le système de l'invention, mais est surtout utile pour faciliter la séparation physique au niveau transport (DIDON) et au niveau service (ANTIOPE).

La sélection de page et le décodage des pages sélectionnées sont effectués dans le circuit 145. Cet ensemble décode une page d'information, rangée par rangée, et vient remplir la mémoire de page 146. Cette mémoire peut présenter une capacité de 1 001 mots de 16 éléments binaires (25 rangées de 40 caractères plus un mot de contrôle), chaque caractère étant codé sur 16 éléments binaires en forme et attributs de visualisation.

Ce rappel étant effectué, on peut aborder la question des modifications à apporter à ce récepteur pour pouvoir effectuer le contrôle d'accès.

La serrure électronique conforme à l'invention étant rattachée au niveau du service, comme il a été souligné plus haut, elle n'a aucune incidence sur la procédure DIDON. Le fonctionnement des circuits 142 (DIDON analogique) et 143 (DIDON numérique) n'est donc en rien modifié. Au travers de la jonction 144, passent donc toujours des données structurées en pages, elles-mêmes structurées en rangées. Parmi ces pages, on distingue toujours des pages fonctionnelles, accessibles grâce aux codes complémentaires, et des pages d'information, accessibles par numérotation sur le clavier 147.

Cependant, parmi ces pages fonctionnelles, une nouvelle variété a été introduite à l'émission en vue du contrôle : c'est la page de contrôle d'accès, dont la structure a été décrite plus haut. En outre, selon l'invention, les pages d'informations ont été verrouillées rangée par rangée, hormis la rangée zéro considérée comme partie intégrante de la procédure. Le circuit 145 doit donc être complété pour pouvoir prendre en compte ces deux éléments nouveaux.

Les compléments nécessaires sont de deux types :

1) Au niveau du décodage des pages d'information : le décodeur doit effectuer le déverrouillage rangée par rangée en utilisant un générateur d'octets semblable à celui qui est mis en œuvre à l'émission ;

2) Au niveau du traitement des pages fonctionnelles : le décodeur doit connaître le mode d'emploi des pages de contrôle d'accès et il doit également savoir dialoguer avec une carte d'abonnement pour obtenir K, la clé de service.

Ces compléments comprennent à la fois du logiciel venant compléter les logiciels déjà existants dans le circuit 145, ainsi que du matériel spécialisé. Ce dernier est représenté sur la figure 10. Il s'agit du générateur d'octets déchiffrants 26′ (qui est analogue au générateur 26 de la figure 5), de la carte d'abonnement 106, du circuit 110 permettant de restituer la clé K à partir de $M_i$ et $C_i$, du comparateur 42 permettant de distinguer les octets appartenant aux colonnes 0 et 1 qui sont interprétés directement pour configurer la mémoire 146, les octets des colonnes 2 à 7 qui passent par la porte OU-exclusif 46, avant d'être interprétés et dirigés vers la mémoire 146.

Au niveau du logiciel, le décodage des pages d'informations par le circuit 145, ne pose pas de problème particulier, car dans sa conception classique (décrite dans la demande de brevet déjà citée), ce circuit a déjà conscience des numéros de page et de rangée.

Il a même conscience de la rangée zéro puisqu'il y analyse les codes complémentaires. Le numéro de page lui sert à sélectionner la page, tandis que le numéro de rangée lui sert à positionner un pointeur dans la mémoire de page 146.

Dans la présente invention, en présence d'une nouvelle rangée d'informations, le décodeur 145 initialise le générateur d'octets déchiffrants 26′, selon le processus indiqué plus haut à propos de la figure 5 et qui fait appel à neuf ordres successifs.

Ensuite, pour chaque octet de la rangée, le décodeur 145 provoque la génération d'un octet déchiffrant $C_j$ ($c_6 = c_7 = c_8 = 0$), et si l'octet reçu $D_j$ n'est pas un code de commande (colonnes 0 et 1) ce que vérifie le comparateur 42, cet octet est combiné par « OU-exclusif » avec l'octet déchiffrant dans la porte 46.

Au niveau du traitement des pages fonctionnelles, le circuit 145 possède les programmes permettant l'analyse et l'usage des pages de contrôle d'accès. Le circuit localise dans la mémoire 108 de la carte 106, à l'adresse appropriée, un bloc d'abonnement valide d'où il extrait l'indice de l'abonnement. Puis il

recherche dans la page d'accès, la rangée correspondant à cet indice d'abonnement (puisque, comme on l'a vu, les rangées sont numérotées par les indices). Il y récupère le bloc d'accès et en extrait le message $M_i$. Ce message est transmis au circuit 110 qui calcule alors la clé K à l'aide de la clé d'abonnement $C_i$ figurant dans le bloc d'abonnement qui vient d'être localisé dans la carte.

Pour restituer cette clé K à partir de $M_i$ et $C_i$, le circuit 110 (qui peut faire partie intégrante de la carte et constituer le support 36) est programmé pour développer un algorithme $K = G_{C_i}(M_i)$ qui est, comme à l'émission, un algorithme à double corps. Les opérations sont les suivantes :

1) Le message $M_i$ (127 éléments binaires utiles) est saisi octet par octet et une multiplication par $C_i$ est effectuée sur le premier corps CG $(2^{127} - 1)$. On forme ainsi un mot $\mu$ :

$$\mu = M \cdot C \text{ modulo } (2^{127} - 1)$$

D'après la construction de M à l'émission, les éléments binaires 1 à 61 de $\mu$ représentent le mot $\nu$, tandis que les éléments binaires 65 à 125 représentent le mot $\pi$. Bein entendu, les éléments binaires 62, 63, 64, 126 et 127 doivent être nuls. S'ils ne le sont pas, on met le mot $\nu$ à zéro avant de continuer le calcul.

2) $\pi$ et $\nu$ sont multipliés sur le deuxième corps CG $(2^{61} - 1)$, ce qui fait disparaître la redondance de confusion et l'on obtient $K = \nu \cdot \pi$ modulo $(2^{61} - 1)$.

Un nouveau test de vraisemblance intervient ici puisque K ayant 56 éléments binaires utiles, les éléments 57, 58, 59, 60 et 61 doivent être nuls. Dans le cas contraire K est mis à zéro avant la poursuite des opérations.

3) les 56 éléments binaires utiles de K sont alors disponibles sous forme de huit octets impairs.

La description qui précède se rapporte à un système ANTIOPE dans lequel l'information est transmise par la procédure DIDON dans les lignes d'un signal de télévision. Mais, il va de soi que l'invention est plus générale, car, elle ne présuppose pas un procédé particulier de transport de l'information puisque comme il a été souligné plus haut, le verrouillage s'effectue au niveau du service et non au niveau du transport.

Il va de soi également que le système ANTIOPE n'a été pris que comme exemple de réalisation et que l'invention pourrait être appliquée à d'autres systèmes sans difficulté pour l'homme de l'art, et notamment au système TITAN ou encore aux systèmes CEEFAX ou ORACLE, ou VIEWDATA ou PRESTEL.

**Revendications**

1. Système de vidéographie comprenant un centre d'émission d'information (2) et des postes récepteurs (4), le centre d'émission comprenant :

— un moyen (6) de composition d'un magazine constitué de pages organisées en rangées de caractères, si ce moyen n'est pas déjà contenu dans la source d'information,

— un circuit (10) de mémorisation du magazine sous forme de signaux numériques groupés en octets (8 éléments binaires), ces octets comprenant des octets de commande et des octets de données, les octets de commande indiquant notamment des en-têtes de fins de pages ainsi que des en-têtes des fins de rangées, les octets de données correspondant à des caractères contenus dans chaque rangée, tous ces octets de commande et de données comprenant un élément binaire de poids fort qui est un élément d'imparité, les octets ayant des 6$^e$ et 7$^e$ éléments binaires nuls étant des octets de commande,

— une jonction (11) reliée au circuit (10), et

— un multiplexeur (12) de diffusion servant à l'insertion des informations dans les lignes d'un signal de télévision,

ce centre d'émission (2) comprenant en outre des moyens de chiffrement de l'information comprenant un circuit (22) délivrant un signal numérique représentant une clé de service (K), un générateur de suite pseudo-aléatoire (26), et un circuit logique OU-exclusif (34) à deux entrées, l'une reliée au générateur et l'autre recevant les signaux à chiffrer,

chaque poste récepteur (4) comprenant :

— un circuit (14) de réception et de démodulation dudit signal de télévision,

— une voie (16) de traitement des signaux vidéo d'image,

— une voie (18) de traitement des signaux numériques contenant notamment un décodeur de signaux numériques, et

— un organe de visualisation (20),

chaque poste récepteur (4) comprenant en outre des moyens de déchiffrement de l'information chiffrée comprenant un circuit (36) délivrant un signal numérique représentant ladite clé de service, un générateur de suite pseudo-aléatoire (26') et un circuit OU-exclusif (46) à deux entrées, l'une reliée au générateur (26') et l'autre recevant les signaux à déchiffrer,

le système étant caractérisé en ce que :

A. dans les moyens de chiffrement du centre d'émission (2)

a) le circuit (22) qui délivre le signal numérique représentant la clé de service (K) délivre un signal qui change de manière aléatoire à des intervalles déterminés,

b) un automate de verrouillage (24) comprend un comparateur (28) à une entrée reliée au circuit (10) de mémorisation du magazine d'où il reçoit des octets clairs, ce comparateur (28) étant apte à

distinguer parmi ces octets clairs, ceux dont les 7$^e$ et 6$^e$ éléments binaires sont nuls, ce comparateur ayant deux sorties (31), (32), la première (31) véhiculant ces octets à 7$^e$ et 6$^e$ éléments binaires nuls et qui est reliée au multiplexeur de diffusion à travers la jonction (11), et la seconde (32) véhiculant les octets clairs $d_j$ dont les 7$^e$ et/ou 6$^e$ éléments binaires ne sont pas nuls, cette seconde sortie (32) étant reliée à l'une des entrées du circuit logique OU-exclusif (34),

c) le générateur de suite pseudo-aléatoire est un générateur d'octets chiffrants (26) commandé par l'automate de verrouillage (24) d'où il reçoit des octets indiquant les numéros de pages et les numéros de rangées des données à transmettre ainsi que le signal correspondant à la clé de service (K), ce générateur d'octets (26) délivrant, pour chaque octet de données $d_j$ d'une rangée visualisable un octet chiffrant $C_j$, cet octet possédant un 8$^e$ élément binaire de parité et des 7$^e$ et 6$^e$ éléments binaires nuls, cet octet étant appliqué à l'autre entrée du circuit logique (34),

B. dans les moyens de déchiffrement de chaque poste récepteur (4) :

d) un automate de déverrouillage (38) comprend un comparateur à une entrée (42) reliée au décodeur (14) de signaux numériques du poste récepteur d'où il reçoit les octets chiffrés, ce comparateur (42) étant apte à distinguer, parmi ces octets chiffrés, ceux dont les 7$^e$ et 6$^e$ éléments binaires sont nuls, ce comparateur (42) ayant deux sorties, (43), (44) la première (43) véhiculant ces octets dont les 7$^e$ et 6$^e$ éléments binaires sont nuls, cette première sortie (43) étant reliée directement à l'organe de visualisation (20), la seconde (44) véhiculant les octets chiffrés $D_j$ dont les 7$^e$ et/ou 6$^e$ éléments binaires ne sont pas nuls, cette seconde sortie (44) étant reliée à l'une des entrées du circuit logique OU-exclusif (46),

e) le générateur de suite pseudo-aléatoire est un générateur d'octets déchiffrants (26') commandé par l'automate de déverrouillage (38) qui lui transmet les octets indiquant les numéros de page et les numéros de rangées des données transmises et le signal correspondant à la clé de service en cours (K), ce générateur d'octets déchiffrants possédant une sortie qui délivre, pour chaque octet chiffré reçu, un octet déchiffrant $C'_j$ possédant un élément binaire de poids fort qui est forcé à zéro et des 7$^e$ et 6$^e$ éléments binaires nuls.

2. Système selon la revendication 1, caractérisé en ce que le générateur d'octets chiffrants (26) du centre d'émission (2) et le générateur d'octets déchiffrants (26') des postes récepteurs (4) comprennent chacun :

— un générateur de suite pseudo-aléatoire (61) et un moyen pour réinitialiser ce générateur au début de chaque rangée visualisable, au moyen de la clé de service (K) et au moyen des numéros de page et de rangée,

— un circuit (84, B1 à B8 Fig. 5) apte à prélever cinq éléments binaires à la sortie du générateur pseudo-aléatoire (61), ces cinq éléments constituant les cinq premiers éléments binaires de l'octet, et apte à ajouter des 6$^e$ et 7$^e$ éléments binaires qui sont nuls, et un 8$^e$ élément binaire qui est un élément de parité pour le générateur d'octets chiffrants et qui est forcé à zéro pour le générateur d'octets déchiffrants.

3. Système selon la revendication 2, caractérisé en ce que la clé de service (K) est constituée par huit octets notés $k_1$ à $k_8$, et en ce que le numéro de rangée étant codé sur deux octets notés $NR_1$ et $NR_2$ et le numéro de page sur trois octets notés $NP_1$, $NP_2$ et $NP_3$, le générateur de suite pseudo-aléatoire (61) est initialisé par huit octets obtenus par combinaison, à l'aide de la fonction logique OU-exclusif notée $\oplus$, des huits octets $k_1$ à $k_8$ respectivement avec huit octets pris parmi les octets $NP_1$, $NP_2$, $NP_3$, $NR_1$ et $NR_2$, ces combinaisons étant par exemple :

$$k_1 \oplus NR_1,\ k_2 \oplus NR_2,\ k_3 \oplus NP_1,\ k_4 \oplus NP_2,\ k_5 \oplus NP_3,\ k_6 \oplus NP_3,\ k_7 \oplus NR_1,\ k_8 \oplus NR_2.$$

4. Système selon la revendication 2, caractérisé en ce que le générateur de suite pseudo-aléatoire (61) est constitué par un circuit comprenant des bascules (50) de type (D) en cascade combinées à des portes logiques de type OU-exclusif (52), ce circuit ayant une entrée (58) reliée à une horloge (H) et matérialisant un polynôme générateur primitif.

5. Système selon la revendication 4, caractérisé en ce que le générateur de suite pseudo-aléatoire (61) est constitué par plusieurs circuits (62), (64), (66) matérialisant chacun un polynôme générateur primitif, les sorties de ces circuits étant combinées par des circuits logiques (68, 72, 74).

6. Système selon la revendication 1, caractérisé en ce qu'il comprend, dans le centre d'émission (2) des moyens (124) aptes à constituer une page de contrôle d'accès avec :

— une rangée zéro qui comprend trois codes complémentaires $C_1$, $C_2$, $C_3$ indiquant qu'il s'agit d'une page de service non visualisable et un quatrième code complémentaire $C_4$ spécifiant qu'il s'agit d'une page de contrôle d'accès,

— des rangées constituées par un en-tête de rangée suivi d'un numéro de rangée, suivi d'un bloc d'accès (102) constitué par un message $M_i$ suivi d'un code de redondance cyclique.

7. Utilisation du système selon l'une quelconque des revendications 1 à 6, à la transmission d'informations selon le système ANTIOPE.

8. Utilisation du système selon l'une quelconque des revendications 1 à 6, à la transmission d'informations selon le système TITAN.

## Claims

1. Videographic system comprising an information transmission station (2) and receiving stations (4), the transmission station comprising :

— composition means (6) for composing a magazine constituted by pages organised into strings of characters, if said means is not already contained in the information source,

— a circuit (10) for memorising the magazine in the form of digital signals grouped into octets (8 bits), said octets comprising command octets and data octets, the command octets indicating especially the addresses of page-starts and page-ends and the addresses of string-starts and string-ends, the data octets corresponding to the characters contained in each string, all the command and data octets having one bit of greater significance which is an odd parity element, the octets having null sixth and seventh bits being command octets,

— an interface (11) connected to circuit (10), and

— a transmission multiplexer (12) acting to insert information into the lines of a television signal, said transmission station (2) additionally comprising information-encoding means comprising a circuit (22) delivering a digital signal representing a service key (K), a pseudo-random sequence generator (26), and an exclusive —OR logic circuit (34) having two inputs, one connected to the generator and the other receiving signals to be encoded, each receiving station (4) comprising :

— a circuit (14) for receiving and demodulating said television signal,

— a channel (16) for treating video image signals,

— a channel (18) for treating digital signals, containing especially a decoder for digital signals, and

— a display means (20),

each receiving station (4) additionally comprising means for decoding the encoded information comprising a circuit (36) delivering a digital signal representing the said service key, a pseudo-random sequence generator (26′) and an exclusive —OR circuit (46) having two inputs, one connected to the generator (26′) and the other receiving signals to be decoded, the system being characterized in that :

A. in the encoding means of the transmission station (2),

a) the circuit (22) delivering the digital signal representing the service key (K) delivers a signal which changes in a random manner at predetermined intervals,

b) an automatic locking means (24) comprising a comparator (28) with one input connected to the magazine memorising circuit (10), from which it receives uncoded octets, said comparator being adapted to distinguish, among said uncoded octets, those whose sixth and seventh bits are null, said comparator having two outputs (31), (32), the first (31) carrying the octets whose sixth and seventh bits are null being connected to the transmission multiplexer across interface (11′), and the second (32) carrying the uncoded octets $d_j$ whose seventh and/or sixth bits are not null, said second output (32) being connected to one input of the exclusive —OR logic circuit (34),

c) the pseudo-random sequence generator is a generator of coding octets (26) commanded by the automatic locking means (24) from which it receives octets indicating the page numbers and the numbers of data strings to be transmitted as well as the signal corresponding to the service key (K), said octet generator (26) delivering an encoding octet $C_j$ for each data octet $d_j$ of a string to be displayed, said encoding octet comprising an eighth even parity bit, and null sixth and seventh bits, said octet being supplied to the other input of the logic circuit (34),

B. in the decoding means of each receiving station (4) :

d) an automatic unlocking means (38) comprises a comparator (42) with one input connected to the digital signal-decoder (14) of the receiving station from which it receives encoded octets, said comparator (42) being adapted to distinguish, from among the encoded octets, those whose seventh and sixth bits are null, said comparator (42) having two outputs (43), (44), the first carrying octets whose seventh and sixth bits are null, said first output being connected directly to the display means (20), the second (44) carrying encoded octets $D_j$ whose seventh and/or sixth bits are not null, said second output (44) being connected to one of the inputs of the exclusive-Or logic circuit (46),

e) the pseudo-random sequence generator is a generator of decoding octets (26′) commanded by the automatic unlocking means (38) which transmits to it the octets indicating the page numbers and the numbers of data strings transmitted and the signal corresponding to the current service key (K), said decoding octet generator having one output which delivers, for each encoded octet received, a decoding octet $C'_j$ having a bit of greater significance that is made zero and null seventh and sixth bits.

2. System according to Claim 1 characterized in that the coding octet generator (26) of the transmission station (2) and the decoding octet generator (26′) of the receiving stations (4) each comprises :

— a pseudo-random sequence generator (61) and a means to reset said generator at the start of each string to be displayed, by means of the service key (K) and by means of the page- and string-numbers,

— a circuit (84, $B_1$ to $B_8$ Fig. 5) adapted to take five bits from the output of the pseudo-random sequence generator (61), said five bits constituting the first five bits of an octet, and adapted to add the sixth and seventh null bits, and an eighth bit, which is a parity element for the coding octet generator, and which is made zero for the decoding octet generator.

3. System according to Claim 2 characterized in that the service key (K) is constituted by eight octets $K_1$ to $K_8$, and in that the string number is coded by two octets $NR_1$ and $NR_2$, and the page number by three octets $NP_1$, $NP_2$ and $NP_3$, the pseudo-random sequence generator is set by combination, using the exclusive —OR logic function $\oplus$, of the eight octets $K_1$ to $K_8$ respectively with eight octets taken among the octets $NP_1$, $NP_2$, $NP_3$, $NR_1$ and $NR_2$, said combinations for example being :

$$K_1 \oplus NR_1,\ K_2 \oplus NR_2,\ K_3 \oplus NP_1,\ K_4 \oplus NP_2,\ K_5 \oplus NP_3,\ K_6 \oplus NP_3,\ K_7 \oplus NR_1,\ K_8 \oplus NR_2.$$

4. System according to Claim 2 characterized in that the pseudo-random sequence generator (61) is constituted by a circuit comprising a cascade of type (D) flip-flops (50) combined with exclusive-Or logic gates (52), said circuit having one input (58) connected to a clock (H) and forming a basic polynomial generator.

5. System according to Claim 4 characterized in that the pseudo-random sequence generator is constituted by a plurality of circuits (62), (64), (66) each producing a basic polynomial generator, the outputs of said circuits being combined by logic circuits (68, 72, 74).

6. System according to Claim 1 characterized in that, in the transmission station (2), it comprises means (124) adapted to constitute an access control page with :

— a zero string comprising three complementary codes $C_1$, $C_2$, $C_3$ indicating a non-displayable service page and a fourth complementary code $C_4$ specifying that it concerns an access-control page,

— strings constituted by a string-address followed by a string number, followed by an access block (102) constituted by a message $M_i$ followed by a cyclic redundance code.

7. The use of a system according to any one of Claims 1 to 6 in the transmission of information by the ANTIOPE system.

8. The use of a system according to any one of Claims 1 to 6 in the transmission of information by the TITAN system.

**Ansprüche**

1. Videographie-System mit einer Informationssendezentrale (2) und Empfangsgeräten (4), wobei die Sendezentrale umfaßt :

— ein Mittel (6) zum Aufbau eines aus in Zeichenreihen organisierten Seiten gebildeten Heftes, wenn dieses Mittel nicht bereits in der Informationsquelle enthalten ist,

— ein Schaltkreis (10) zum Speichern des Heftes in der Form von zu Oktetten (8 Binärelemente) gruppierten Digitalsignalen, wobei diese Oktette Befehlsoktette und Datenoktette umfassen, und die Befehlsoktette insbesondere den Anfang und das Ende der Seiten sowie den Anfang und das Ende der Reihen angeben, und die Datenoktette den in jeder Reihe enthaltenen Zeichen entsprechen, wobei alle diese Befehlsoktette und Datenoktette ein Binärelement mit einer höherwertigen Wertigkeit umfassen, welches ein Paritätselement ist, und die Oktette, bei denen das sechste und siebte Binärelement Null ist, Befehlsoktette sind,

— eine mit dem Schaltkreis 10 verbundene Verbindung (11) und,

— einen Sendemultiplexer (12), der zum Einführen der Informationen in die Leitungen für ein Fernsehsignal dient,

wobei die Sendezentrale (2) ferner Mittel zum Verschlüsseln der Information aufweist, die einen Schaltkreis (22), der ein einen Servicekode (K) darstellendes Digitalsignal liefert, einen Pseudozufallszahlenfolge-Generator (26) und einen logischen, exklusiven ODER-Schaltkreis (34) mit zwei Eingängen umfaßt, von denen einer mit dem Generator verbunden ist und der andere die zu verschlüsselnden Signale empfängt,

wobei jedes Empfangsgerät (4) umfaßt :

— einen Schaltkreis (14) zum Empfangen und Demodulieren des Fernsehsignals,

— einen Zweig (16) zum Verarbeiten der Fernsehbildsignale,

— einen Zweig (18) zum Verarbeiten der Digitalsignale, welcher insbesondere einen Dekodierer für Digitalsignale umfaßt, und

— eine Anzeigeeinrichtung (20),

wobei jedes Empfangsgerät (4) ferner Mittel zum Entschlüsseln der verschlüsselten Information aufweist, die einen Schaltkreis (36), welcher ein den Service kode darstellendes Digitalsignal liefert, einen Pseudozufallszahlenfolger-Generator (26') und einen exklusiven ODER-Schaltkreis (46) mit zwei Eingängen umfaßt, von denen einer mit dem Generator (26') verbunden ist und der andere die zu entschlüsselnden Signale empfängt, wobei das System dadurch gekennzeichnet ist, daß :

A. bei den Mitteln der Sendezentrale (2) zum Verschlüsseln

a) der Schaltkreis (22), welcher das den Servicekode (K) darstellende Digitalsignal liefert, ein Signal liefert, welches sich auf zufällige Weise in bestimmten Intervallen ändert,

b) eine Verriegelungseinrichtung (24) einen Vergleicher (28) mit einem mit dem Schaltkreis (10) zum Speichern des Heftes verbundenen Eingang, aufweist, von wo er unverschlüsselte Oktette erhält, wobei der Vergleicher (28) bei diesen unverschlüsselten Oktetten diejenigen unterscheiden kann, deren

siebtes und sechstes Bitelement Null sind, und der Vergleicher zwei Ausgänge (31), (32) besitzt, von denen der erste (31) diese Oktette mit Null bei dem siebten und sechsten Binärelement überträgt und mit dem Sendemultiplexer über die Verbindung (11') verbunden ist, und der zweite (32) die unverschlüsselten Oktette $d_j$ überträgt, deren siebstes und/oder sechstes Binärelement von Null verschieden sind, wobei dieser zweite Ausgang (32) mit einem der Eingänge des logischen, exklusiven ODER-Schaltkreis (34) verbunden ist,

c) der Pseudozufallszahlenfolge-Generator ein Verschlüsselungsoktett-Generator (26) ist, der von der Verriegelungseinrichtung (24) gesteuert wird, von der er Oktette erhält, welche die Seitenzahlen und die Reihenzahlen der zu übertragenden Daten sowie das dem Servicekode (K) entsprechende Signal enthalten wobei der Oktett-Generator (26) für jedes Datenoktett $d_j$ einer anzeigbaren Reihe ein Verschlüsselungsoktett $C_j$ liefert, welches ein achtes Binärelement für die Parität und ein siebtes und sechstes Binärelement mit Null aufweist und dem anderen Eingang des logischen Schaltkreises (34) zugeführt wird,

B. daß bei den Mitteln eines jeden Empfangsgerätes (4) zum Entschlüsseln

d) eine Entriegelungseinrichtung (38) einen Vergleicher mit einem mit dem Dekodierer (14) für die Digitalsignale des Empfangsgerätes verbundenen Eingang (42) aufweist, von wo er die verschlüsselten Oktette erhält, wobei der Vergleicher (42) bei diesen verschlüsselten Oktetten diejenigen unterscheiden kann, deren siebtes und sechstes Binärelement Null sind, wobei dieser Vergleicher (42) zwei Ausgänge (43), (44) besitzt, von denen der erste (43) diese Oktette, deren siebtes und sechstes Binärelement Null sind, durchläßt, wobei dieser erste Ausgang (43) unmittelbar mit der Anzeigeeinrichtung (20) verbunden ist, und der zweite Ausgang (44) die verschlüsselten Oktette $D_j$ überträgt, deren siebtes und/oder sechstes Binärelement von Null verschieden sind, und dieser zweite Ausgang (44) mit einem der Eingänge des logischen, exklusiven ODER-Schaltkreises (46) verbunden ist,

e) der Pseudozufallszahlenfolge-Generator ein Entschlüsselungsoktett-Generator (26) ist, der von der Entriegelungseinrichtung (38) gesteuert wird, die ihm Oktette, welche die Seitenzahlen und die Reihenzahlen der übertragenen Daten anzeigen, und das den gerade verwandten Servicekode (K) entsprechende Signal überträgt, wobei der Entschlüsselungsoktett-Generator einen Ausgang besitzt, welcher für jedes erhaltene, verschlüsselte Oktett ein Entschlüsselungsoktett $C'_j$ liefert, welches ein Binärelement mit höherwertiger Gewichtung, welches auf Null gesetzt ist, und ein siebtes und sechstes Binärelement mit Null aufweist.

2. System nach Anspruch 1, dadurch gekennzeichnet, daß der Verschlüsselungsoktett-Generator (26) der Sendezentrale (2) und der Entschlüsselungsoktett-Generator (26') der Empfangsgeräte (4) jeweils umfassen :

— einen Pseudozufallszahlenfolge-Generator (61) und ein Mittel zum erneuten Initialisieren des Generators zu Beginn einer jeden sichtbar zu machenden Zeile mittels des Servicekodes (K) und der Zahlen der Seite und der Reihe,

— einen Schaltkreis (84, $B_1$-$B_8$ Fig. 5), welcher fünf Binärelemente am Ausgang des Pseudozufallszahlen-Generators (61) abnehmen kann, wobei diese fünf Elemente die ersten fünf Binärelemente des Oktettes bilden, und der sechste und siebte Binärelemente, welche Null sind, und ein achtes Binärelement hinzufügen kann, welches ein Paritätselement für den Generator für die Verschlüsselungsoktetts ist und welches für den Generator für die Entschlüsselungsoktetts auf Null gezwungen ist.

3. System nach Anspruch 2, dadurch gekennzeichnet, daß der Servicekode (K) von acht mit $k_1$ bis $k_8$ bezeichneten Oktetten gebildet ist und daß die Reihenzahl in zwei mit $NR_1$ und $NR_2$ bezeichneten Oktetten und die Seitenzahl in drei mit $NP_1$, $NP_2$ und $NP_3$ bezeichneten Oktetten kodiert sind, wobei der Pseudozufallszahlenfolge-Generator (61) durch acht Oktette initialisiert wird, die mit Hilfe der logischen Funktion des exklusiven ODER, die mit ⊕ bezeichnet ist, durch Kombination der acht Oktette $k_1$ bis bzw. $k_8$ mit acht Oktetten, die aus den Oktetten $NP_1$, $NP_2$, $NP_3$, $NR_1$ und $NR_2$ genommen werden, erhalten werden, wobei diese Kombinationen beispielsweise sind :

$$k_1 \oplus NR_1,\ k_2 \oplus NR_2,\ k_3 \oplus NP_1,\ k_4 \oplus NP_2,\ k_5 \oplus NP_3,\ k_6 \oplus NP_3,\ k_7 \oplus NR_1,\ k_8 \oplus NR_2.$$

4. System nach Anspruch 2, dadurch gekennzeichnet, daß der Pseudozufallszahlenfolge-Generator (61) von einem Schaltkreis gebildet ist, welcher Kippschaltungen (50) vom Typ (D) in Kaskade kombiniert mit logischen Gattern vom exklusiven ODER-Typ (52) umfaßt, wobei der Schaltkreis einen mit einem Taktgeber (H) verbundenen Eingang (58) aufweist und einen Generator für ein primitives Polynom verkörpert.

5. System nach Anspruch 4, dadurch gekennzeichnet, daß der Pseudozufallszahlenfolge-Generator (61) von mehreren Schaltkreisen (62), (64), (66) gebildet ist, von denen jeder einen Generator für ein primitives Polynom darstellt, wobei die Ausgänge dieser Schaltkreise über logische Schaltkreise (68) 72, 74) kombiniert sind.

6. System nach Anspruch 1, dadurch gekennzeichnet, daß es in der Sendezentrale (2) Mittel (124) umfaßt, die eine Zugriffssteuerung-Seite bilden kann mit :

— einer Reihe Null, welche drei komplementäre Kode $C_1$, $C_2$, $C_3$, die anzeigen, ob es sich um eine nicht sichtbar zu machende Serviceseite handelt, und einem vierten komplentären Kode $C_4$ umfaßt, welcher festlegt, daß es sich um eine Zugriffssteuerung-Seite handelt,

— Reihen, welche von einem Anfang der Reihe, gefolgt von einer Reihenzahl, gefolgt von einem Zugriffsblock (102), der von einer Mitteilung $M_i$ gebildet ist, gefolgt von einem Kode zyklischer Redundanz gebildet sind.

7. Verwendung des Systems nach irgendeinem der Ansprüche 1 bis 6 bei der Informationsübertragung mit dem System ANTIOPE.

8. Verwendung des Systems nach irgendeinem der Ansprüche 1 bis 6 bei der Informationsübertragung mit dem System TITAN.

FIG. 1

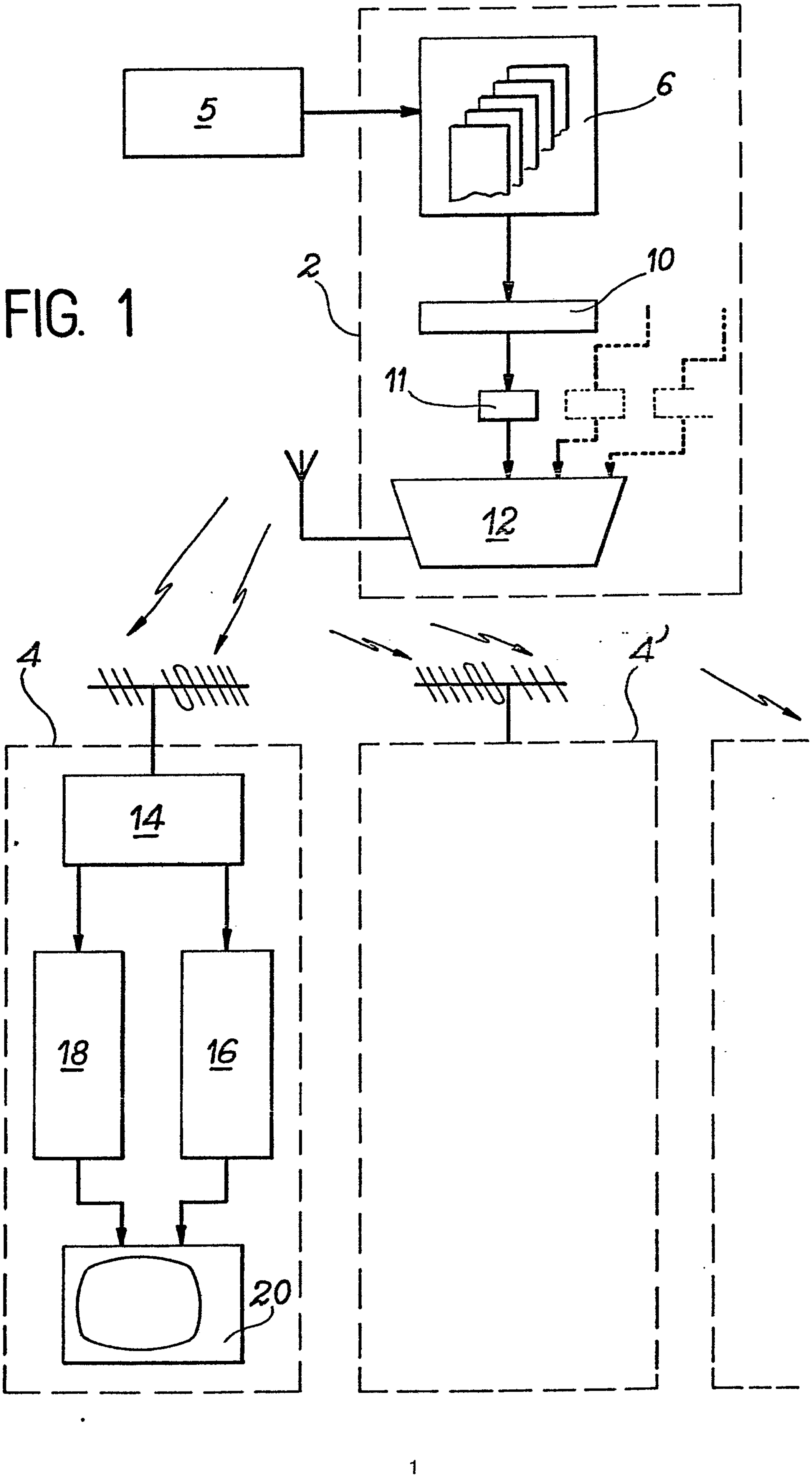

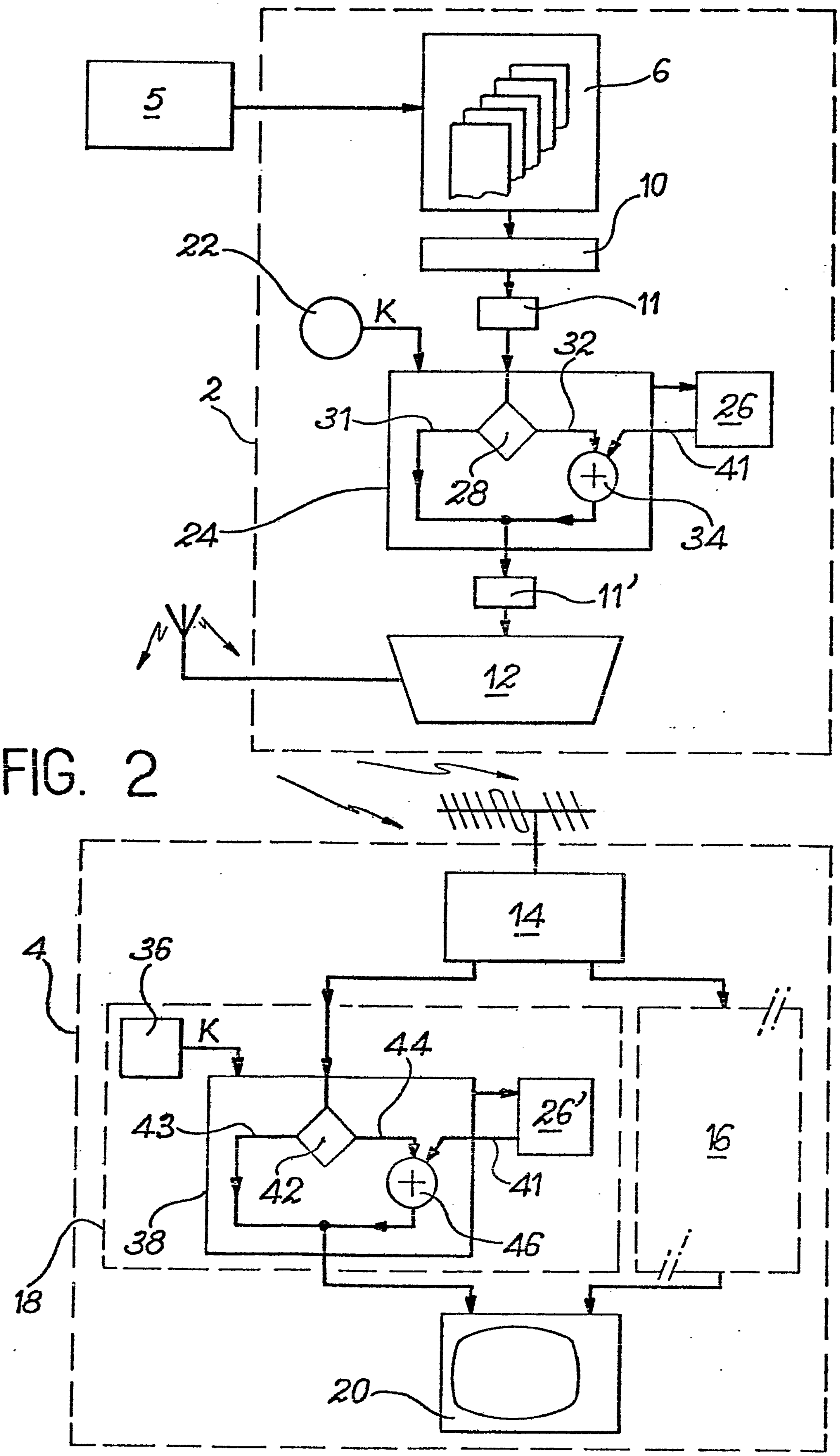
5
6
10
11
22
K
32
26
2
31
28
41
24
34
11'
12
14
4
36
K
44
26'
43
16
42
41
38
46
18
20

FIG. 2

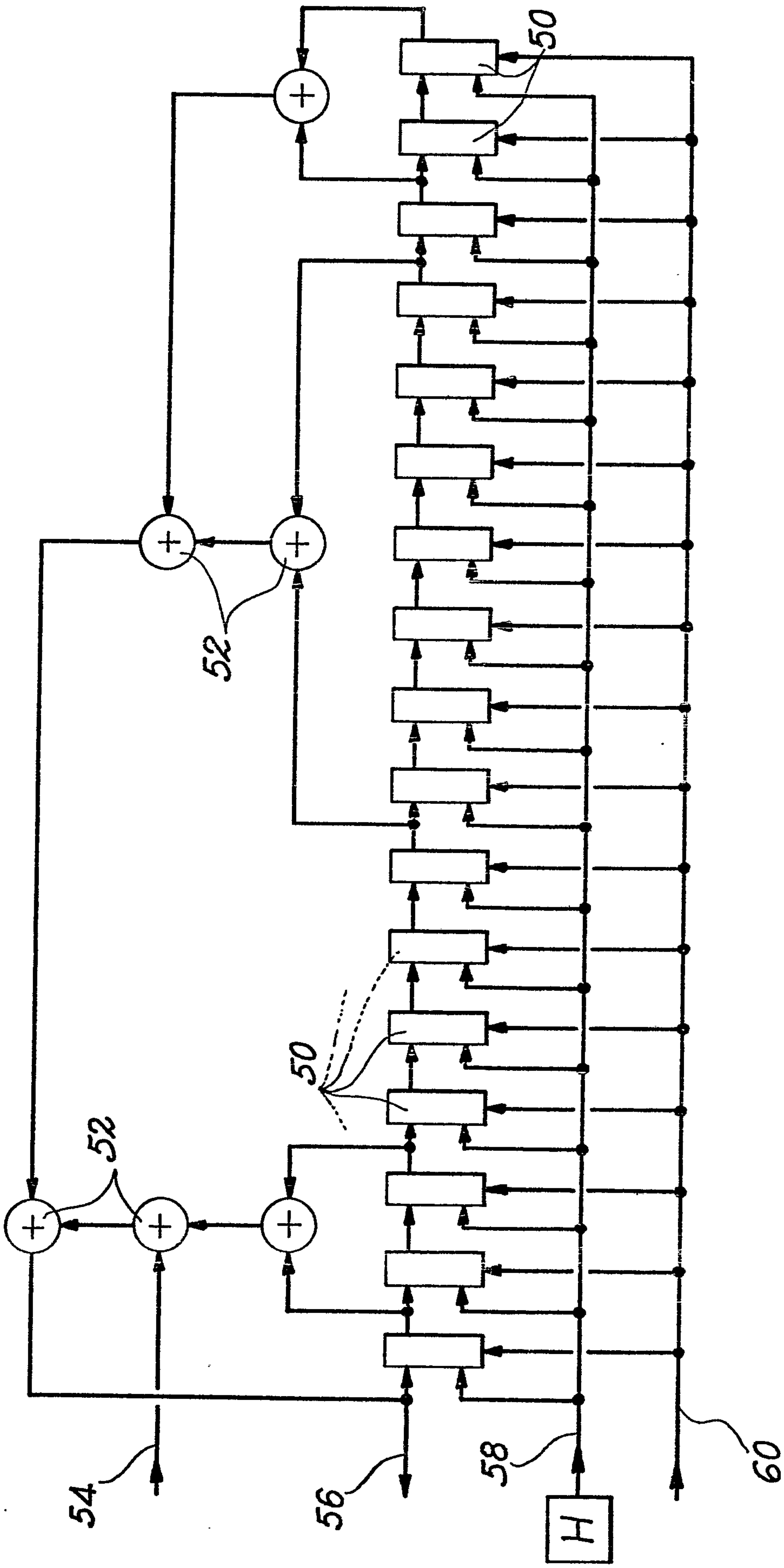


FIG. 3

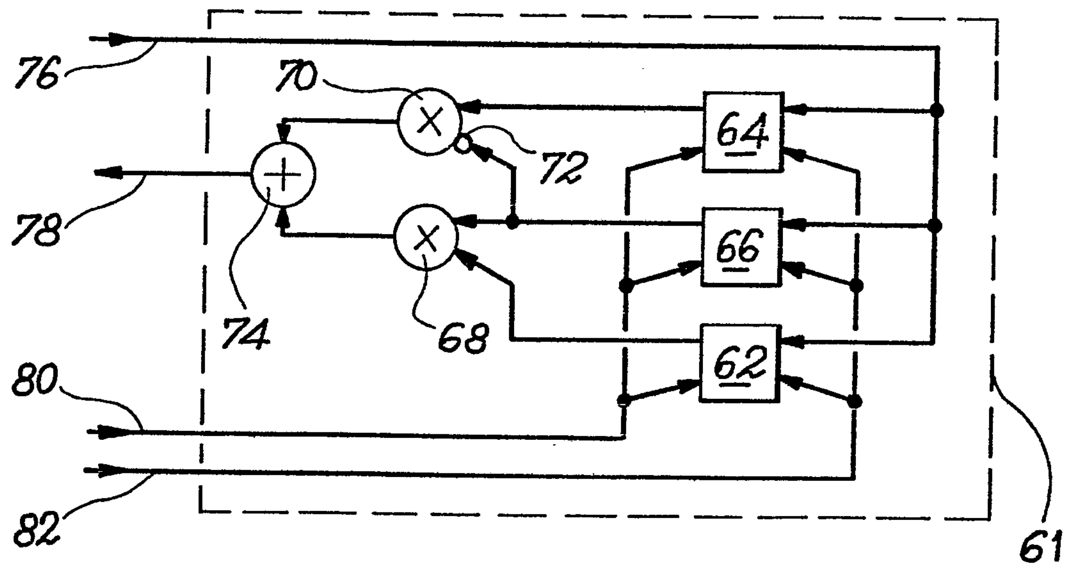
76
70
64
72
78
66
74
68
80
62
82
61

FIG. 4

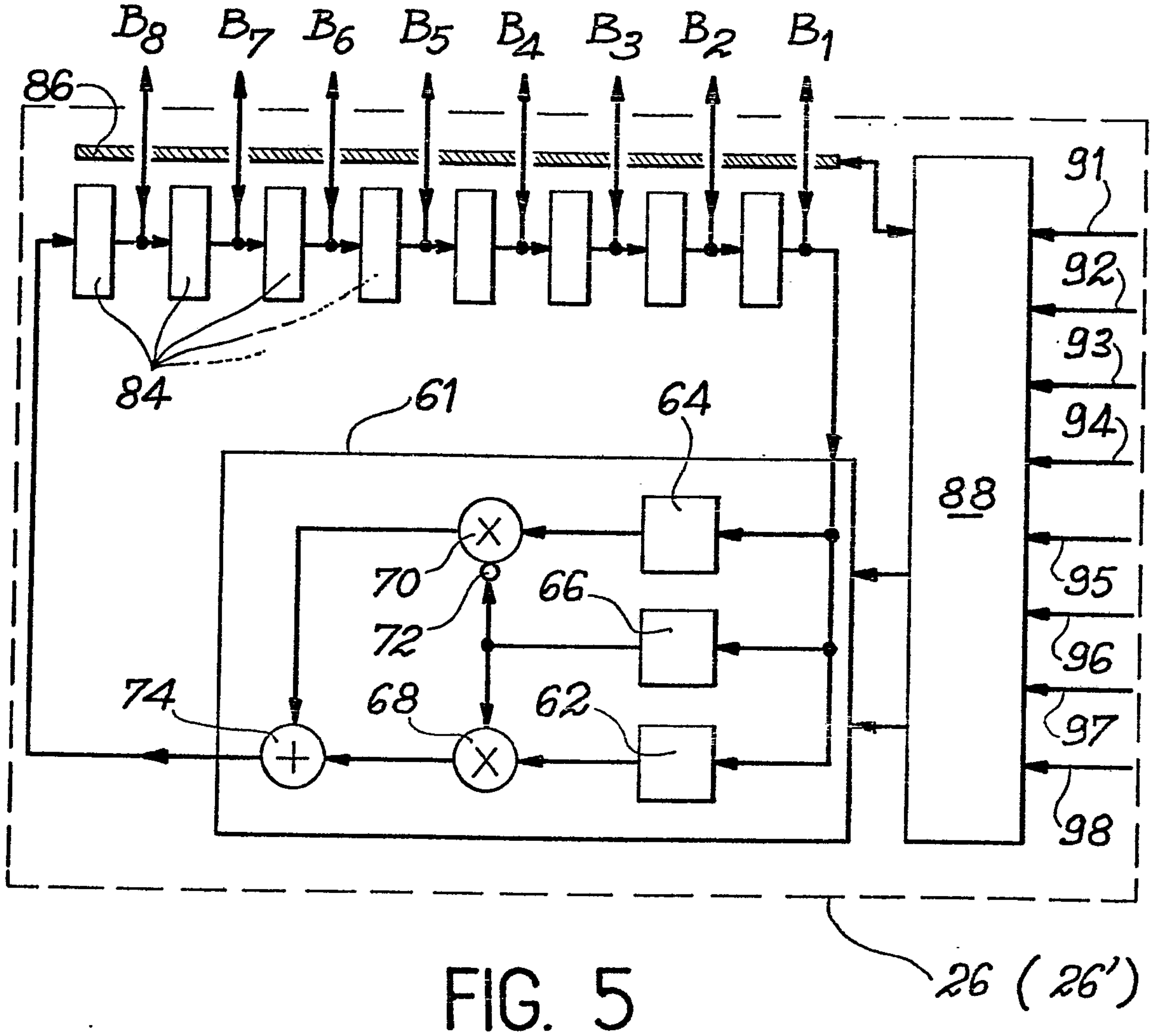
B8
B7
B6
B5
B4
B3
B2
B1
86
91
92
93
94
84
61
64
88
70
66
72
95
96
74
68
62
97
98
26 ( 26')

FIG. 5

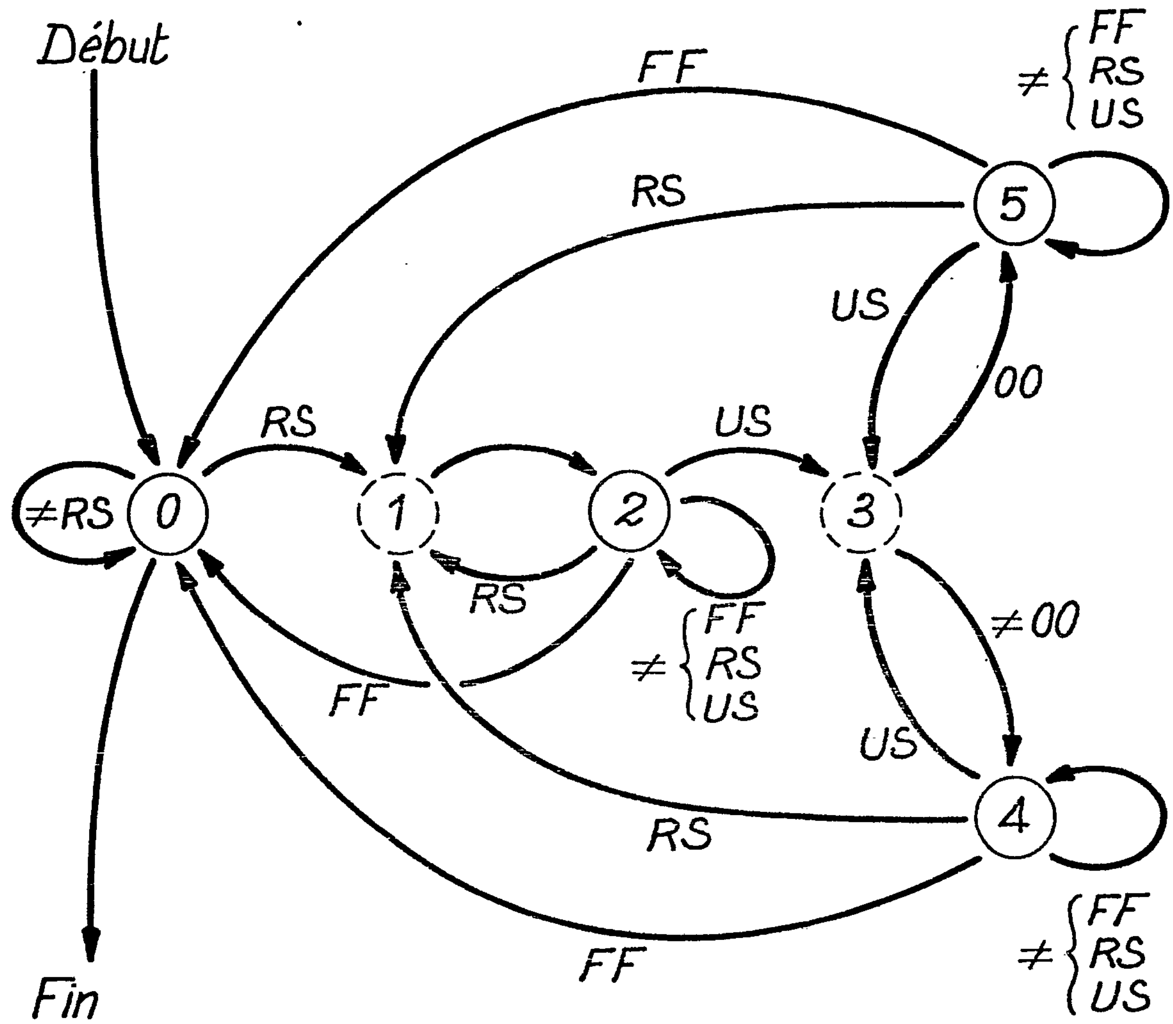
Début
FF
≠ FF RS US
RS
5
US
00
RS
US
≠RS
0
1
2
3
RS
≠00
FF
≠ FF RS US
US
RS
4
FF
≠ FF RS US
Fin

FIG. 6

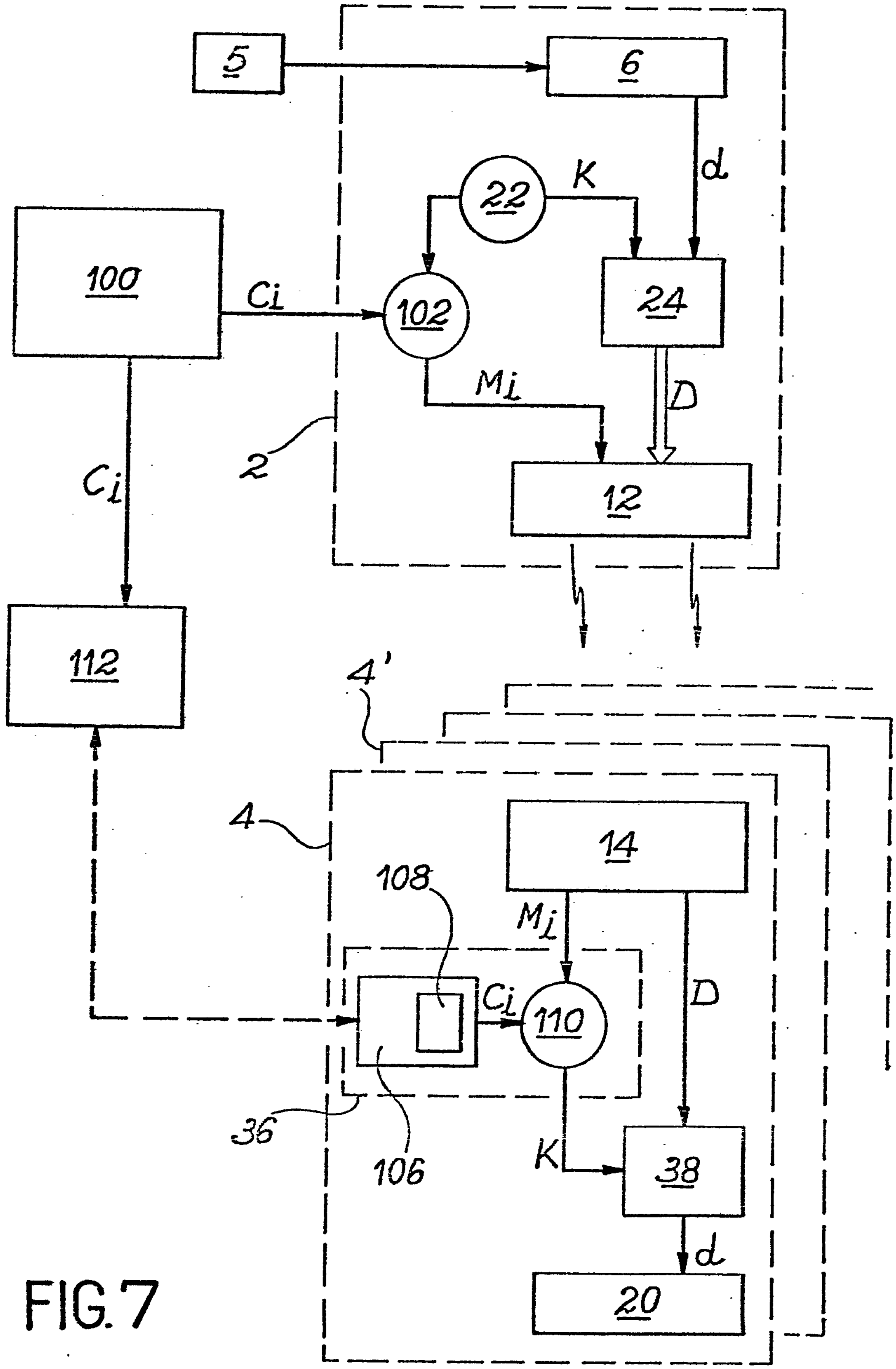
5
6
d
K
22
100
Ci
102
24
Mi
D
2
Ci
12
112
4'
4
14
108
Mi
D
Ci
110
36
106
K
38
d
20

FIG. 7

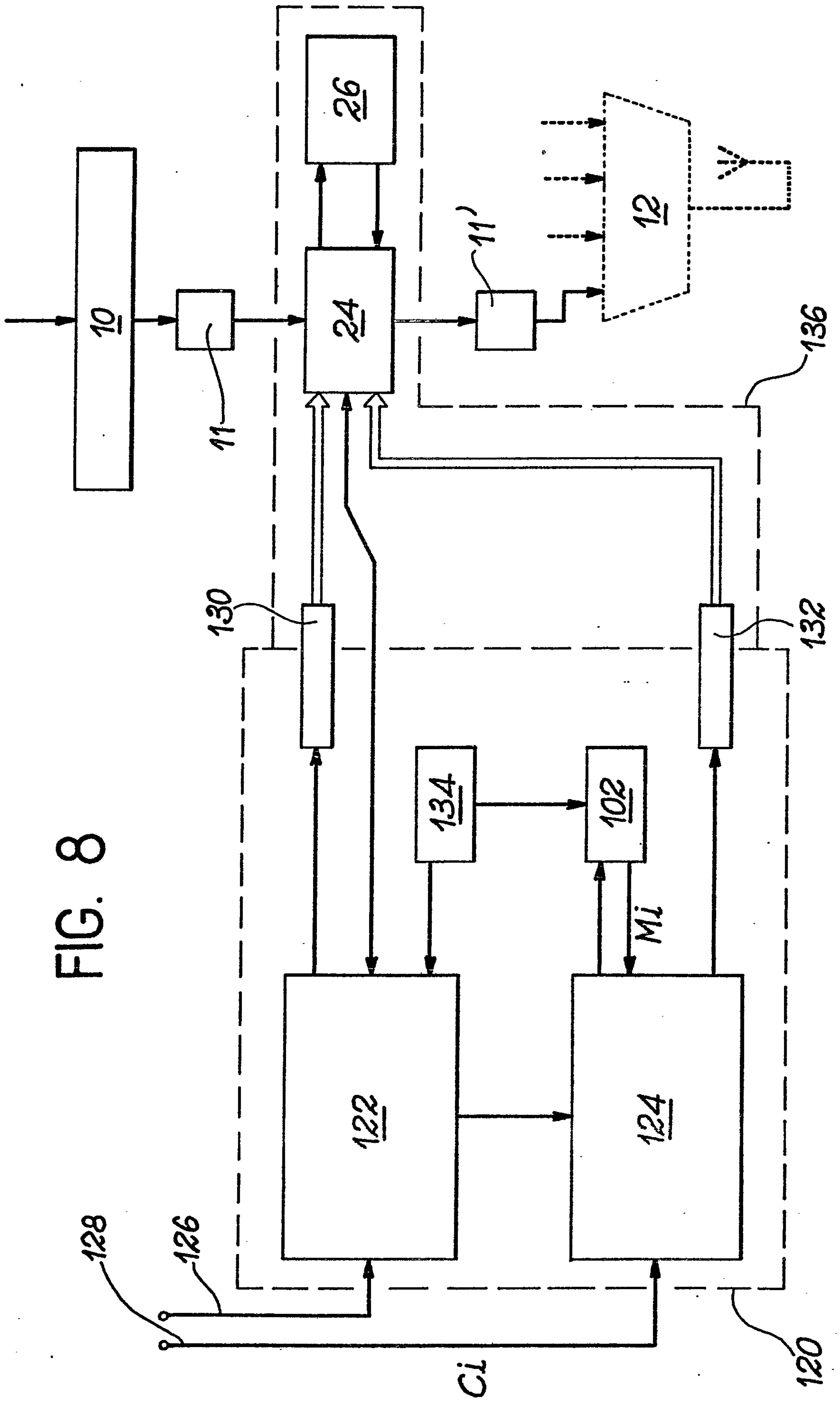


FIG. 8

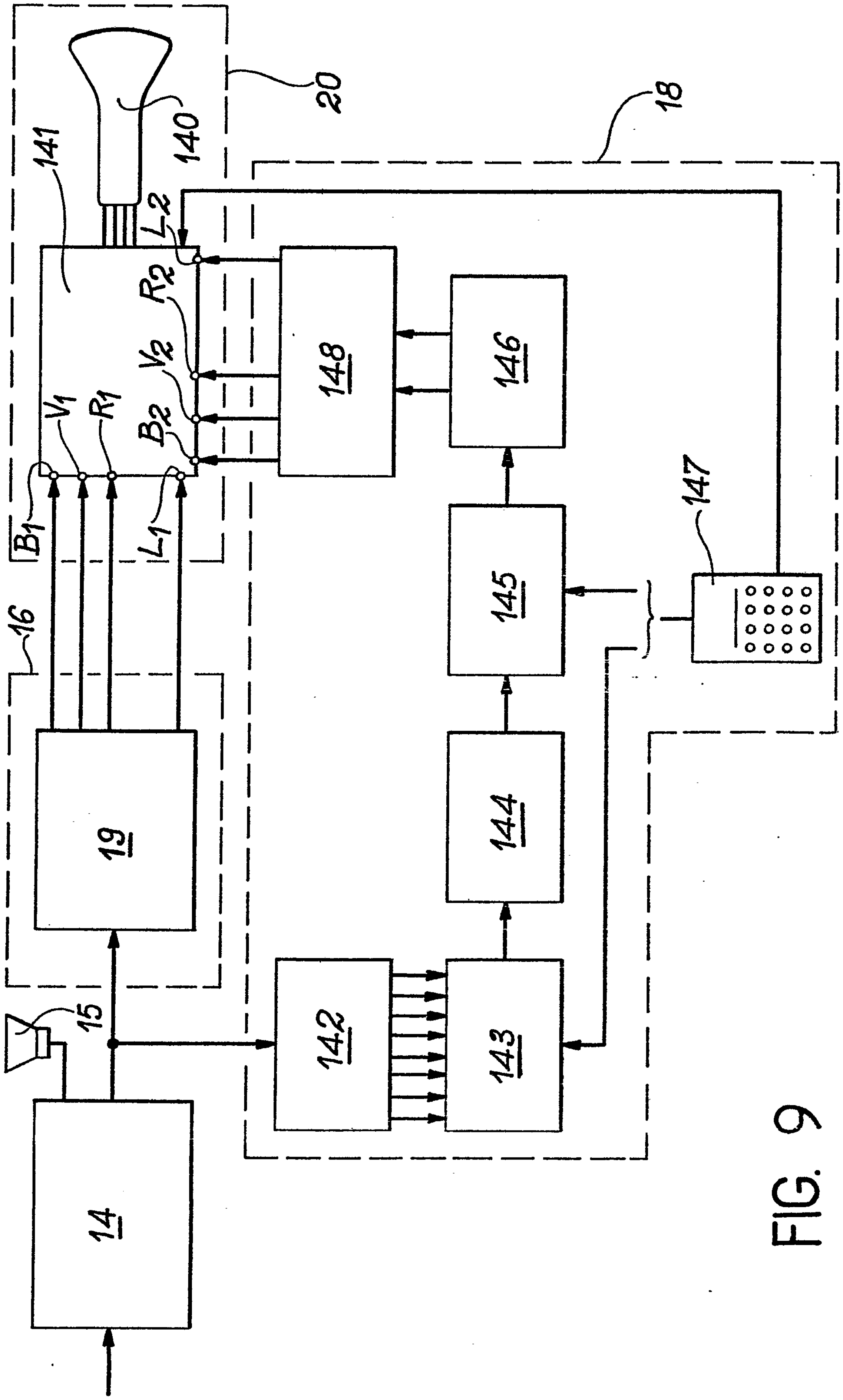
14
15
16
19
20
18
140
141
142
143
144
145
146
147
148
B1
V1
R1
L1
B2
V2
R2
L2

FIG. 9

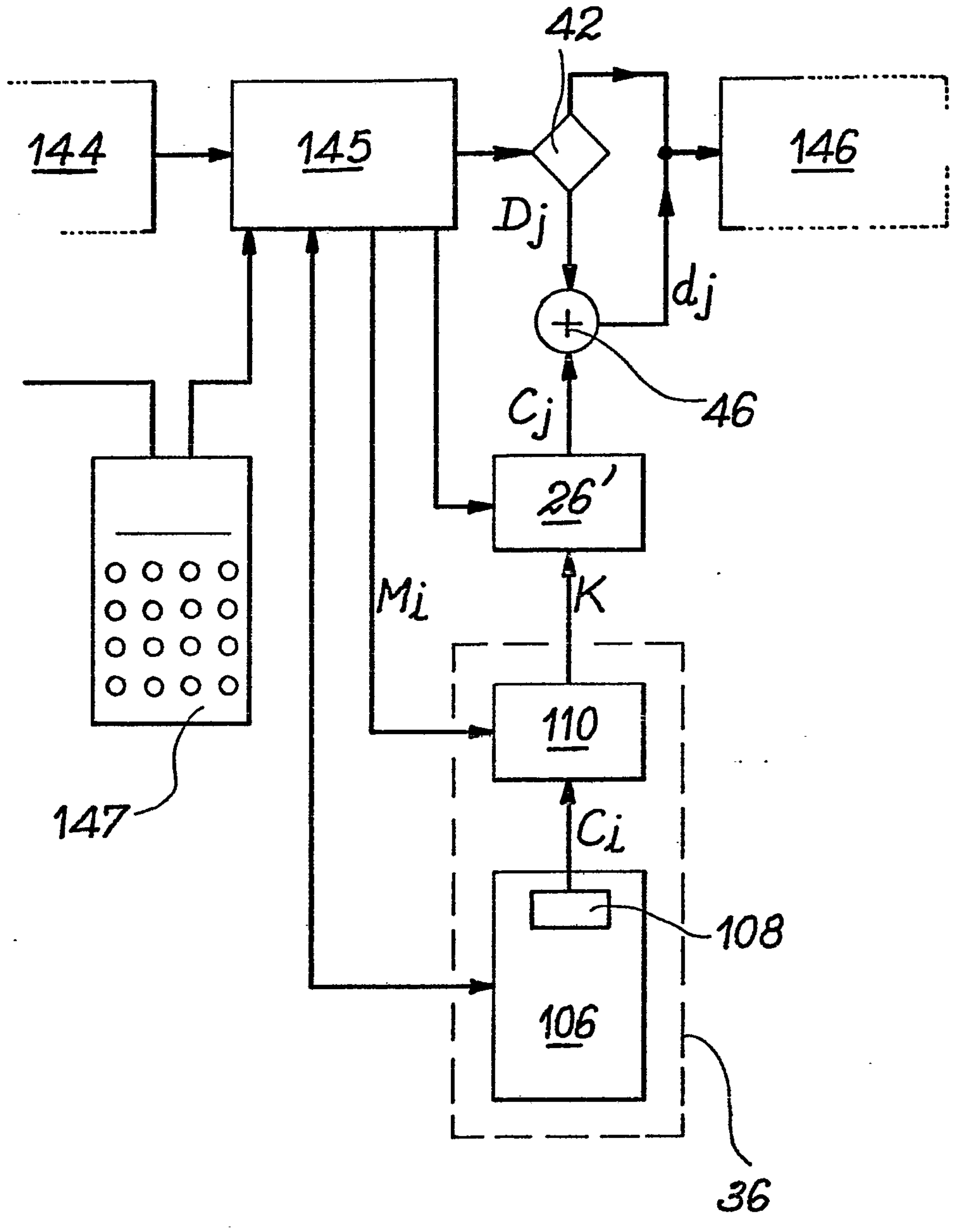


FIG. 10